# EUROPEAN PATENT APPLICATION

(11) **EP 4 497 598 A1**
(43) Date of publication of application: **29.01.2025**
(21) Application number: 23208028.3
(22) Date of filing: 06.11.2023
(51) Int. Cl.: B41J 2/045, B41J 2/14

(54) **PRINTHEAD**

(30) Priority: 25.07.2023 EP 23187597
(71) Applicant: Quantica GmbH, 12555 Berlin (DE)
(72) Inventor: HARTKOPP, Ben, 12439 Berlin (DE); NIEDNER, David, 13187 Berlin (DE); GARCÍA GÓMEZ, Arturo, 10825 Berlin (DE)
(74) Representative: Vossius & Partner Patentanwälte Rechtsanwälte mbB

(57) **Abstract**

A method for operating an actuator unit for a printhead, wherein the actuator unit comprises: a first piezoelectric element connected to a first electric potential and a third electric potential; a second piezoelectric element connected to a second electric potential and the third electric potential; and wherein the actuator unit is configured such that it deflects, when the first and second electric potential has the same polarity with respect to the third electric potential; wherein the method comprises: applying a first variable high voltage, Vt, between the first electric potential and the third electric potential; applying a second variable high voltage, Vb between the second electric potential and the third electric potential; and applying a switchable ground connection to the third electric potential.

## Description

The invention relates to a printhead, preferably a printhead of a 3D printer or a 2D printer. In detail, the invention relates to a actuator for said printhead, a fluidic system for said printhead, and a method for driving said actuator.

An example of a 3D printhead is disclosed, e.g., in patent applications EP 3 825 100 A1; EP 21 215 072.6; and EP 21 212 024.0, all of which are herewith incorporated by reference. In particular, wherever possible the same names and definitions are used as in the aforementioned applications. However, the same printhead may be deployed in a 2D printer.

The main principle of a printhead is that a material is initially stored in a reservoir, preferably in a liquid phase. The material, also referred to as fluid or liquid, is then transported to and/or into the printhead via conduit elements, e.g., pipes, tubes, or connector elements.

In the printhead the fluid is further transported into a pressurization area. Then a portion of the fluid is ejected from the pressurization area through a nozzle opening in a nozzle plate. The ejection is caused by a movement of an actuator and the displacement of the liquid in the pressurization area by the moving actuator, preferably via an extension member attached to the actuator.

The displacement of material caused by an extension member causes a localized and temporal positive pressurization of the liquid material within the ejection area. The shaped areas situated between one or more lower surfaces being displaced though the displacement of the extension member and their orthogonal projection onto the upper surface of the nozzle plate and/or a spacing plate may be referred to as an ejection area and may additionally be referred to as a virtual chamber, when it is experiencing a portion of said positive pressurization present in the greater pressurization area.

To improve the overall performance and to allow for higher native resolution printing of high viscosity inks, the mechanical and electrical actuator design and/or the fluidic design of the printhead may be optimized.

In detail, an improved design of the material transport in the printhead improves the printing efficiency and capabilities, such as printing of sedimenting and/or agglomerating inks, or printing with an angled printhead relating to gravity and such.

Furthermore, a simplified structural design of the printhead elements reduces the structural complexity of the printhead, in particular of the material cycling system, and thus reduces the assembling complexity. Consequently, one or more of the printing efficiency, capabilities, and the cost efficiency is improved.

Still further, an improved electrical design and/or electrical signal design allows for a more efficient movement and for new movement modes. Thus, the printing efficiency is improved.

The invention is set out in the appended set of claims. Any references in the following description to embodiments, objects, aspects and/or examples which are not covered by the appended claims are considered as not being part of the present invention.

According to an aspect of the invention there is provided a printhead for a printer comprising: a first housing element comprising at least two first channel structures, wherein the first channel structures extend in a first direction and are configured to transport a liquid material; a second housing element arranged under the first housing element and comprising a plurality of second channel structures, wherein the second channel structures extend in a second direction, which is essentially perpendicular to the first direction, and are configured to transport the liquid material; wherein each second channel structure overlaps a portion of one of the first channel structures and a portion of at least one further first channel structure for liquid communication of the liquid material between the two portions of the two or more first channel structures.

The first housing element is hereinafter also referred to as main fluidic plate. The second housing element is hereinafter referred to as spacing plate.

In an embodiment of the invention, the printhead is further comprising a plurality of extension members each protruding from an actuator through respective openings in the first housing element in a direction essentially perpendicular to a plane defined by the first direction and the second direction; and wherein the extension members are arranged essentially parallel and form essentially a line in the first direction.

In an embodiment of the invention, each second channel structure is configured to form an ejection area under a respective end portion of the extension member.

In an embodiment of the invention, the printhead is further comprising a nozzle plate with nozzle openings for ejecting the liquid material arranged under the second housing element, wherein the nozzle openings are arranged preferably at positions corresponding to the positions of the ejection areas, and wherein the printhead is preferably configured to eject the liquid from a respective ejection area through a respective nozzle opening based on an actuation of the respective extension member.

In an embodiment of the invention, the printhead is further comprising a membrane element provided under the first housing element and above the second housing element, wherein the membrane element is configured to seal the first housing element from the second housing element at least in an area of an end-portion of the extension member and to form a pressurization area within the second channel in said area.

In an embodiment of the invention, the printhead is further comprising a heating element, and wherein the heating element is provided:
a) within the first housing element,
b) under the first housing element and above the membrane element, or
c) under the first housing element and under the membrane element.

In an embodiment of the invention, the membrane element comprises a shaped portion at the end portions of the extension members, wherein the shaped portion is configured to match the shape of the end-portion of the extension member or of an intermediate element attached to the end portion of the extension member.

In an embodiment of the invention, one or more additional referencing elements are provided on a free actuator end portion to define a position from where the extending member protrudes.

In an embodiment of the invention, at least one of the first channel structures is configured as inflow channel and is preferably connected to an inflow connector; and wherein the at least one other first channel structure is configured as outflow channel and is preferably connected to an outflow connector.

In an embodiment of the invention, a cross-section of the inflow channel is continuously reduced from one end to another end along a transport direction of the material; and/or wherein a cross-section of the outflow channel is continuously increased from one end to another end along the transport direction of the material.

In an embodiment of the invention, at a central position of the actuator a top clamping element and/or a bottom clamping element are provided, which are configured to restrict the motion of the actuator.

In an embodiment of the invention, the first channel structures and/or the second channel structures are formed by at least one of the following methods: etching, laser ablation, injection molding, or milling.

In an embodiment of the invention, the one or more junction portion is formed in at least one of the first channel structures to connect the respective channel structure is a connector element.

In an embodiment of the invention, at least one bypass channel is formed to connect at least two of the first channel structures.

According to an aspect of the invention there is provided a method for assembling of a printhead comprising: providing a first housing element comprising at least two first channel structures, wherein the first channel structures extend in a first direction and are configured to transport a liquid material; arranging a second housing element under the first housing element, wherein the second housing element is comprising a plurality of second channel structures, wherein the second channel structures extend in a second direction, which is essentially perpendicular to the first direction, and are configured to transport the liquid material; wherein the second housing element is arranged such that each second channel structure overlaps a portion of one of the first channel structures and a portion of at least one further first channel structure for liquid communication of the liquid material between the two portions of the two or more first channel structures.

According to an aspect of the invention there is provided an actuator unit for a printhead, comprising: a first piezoelectric element and a second piezoelectric element provided on opposing surfaces of a spacing element, wherein the surface not facing the spacing element of each of the first piezoelectric element and the second piezoelectric element is connected to a first and second electric potential, respectively, preferably a high voltage signal, wherein the surface facing the spacing element of the first piezoelectric element and second piezoelectric element is connected to a third electric potential, preferably a switchable ground potential, and wherein the first piezoelectric element and the second piezoelectric element are configured such that one contracts and the other expands in a direction essentially parallel to the surfaces facing the spacing element, when the first and second electric potential has the same polarity with respect to the third potential.

The spacing element is also referred to hereinafter as stiffening element. The first piezoelectric element is preferably top piezoelectric element; and the second piezoelectric element is preferably a bottom piezoelectric element.

In an embodiment of the invention, the first piezoelectric element and the second piezoelectric element have the same polar axis direction.

In an embodiment of the invention, the actuator unit has a thickness direction, a width direction, and a length direction longer than the width direction, wherein the first piezoelectric element and the second piezoelectric element are provided in the thickness direction on the spacing element, wherein the polar axis of the first piezoelectric element and the second piezoelectric element is configured such that the respective d31 mode deformation is in the length direction of the actuator.

In an embodiment of the invention, the first potential and the second potential originate from the same high voltage signal.

In an embodiment of the invention, on at least one of the surfaces of the first piezoelectric element (302) and the second piezoelectric element (303) an electrode is provided, and wherein the electrode is preferably a thin film electrode.

In an embodiment of the invention, one end portion of the actuator in the length direction is fixed to the printhead and the other end portion is a free end.

In an embodiment of the invention, at the free end of the actuator an extension member protrudes form one surface of the first piezoelectric element or the second piezoelectric element.

In an embodiment of the invention, the spacing element is a stiffening element is configured to increase the stiffness of the actuator.

In an embodiment of the invention, wherein the spacing element is made of a non-conductive material, preferably of one or more of a glass fiber material, a carbon fiber material, a metal oxide material, a composite material, or a ceramic material.

In an embodiment of the invention, the first piezoelectric element (302) and of the second piezoelectric element (303) are made of one or more variants of lead zirconate titanate, PZT.

According to an aspect of the invention there is provided an actuator block for a printhead, comprising: a plurality of actuator units according to any one the preceding embodiments arranged essentially in parallel in a width direction of the actuator units, wherein the respective first, second, and third potential of each actuator unit is controlled via a controller with a separate output for each actuator unit.

In an embodiment of the invention, the actuator units are arranged in a saw tooth configuration with lengthwise orientation of the actuator units.

According to an aspect of the invention there is provided an actuator assembly for a printhead, comprising: a plurality of actuator blocks according to the preceding aspect and arranged essentially in parallel in a width direction of the actuator units.

According to an aspect of the invention there is provided a method for an actuator unit according to any one of the preceding embodiments, comprising the steps of applying a first variable high voltage, Vt, between the first electric potential and the third electric potential, applying a second variable high voltage, Vb, between the second electric potential and the third potential, and applying a switchable ground connection to the third potential, wherein first variable high voltage, Vt, and the second variable high voltage, Vb, are the same variable high voltage and preferably a positive or negative voltage.

In an embodiment of the invention, the first and second voltage and the ground connection state are selected such that the displacement of the actuator is below the speed of sound of the liquid material ejected from the printhead.

According to an aspect of the invention a method for operating an actuator unit for a printhead, wherein the actuator unit comprises: a first piezoelectric element connected to a first electric potential and a third electric potential; a second piezoelectric element connected to a second electric potential and the third electric potential; and wherein the actuator unit is configured such that it deflects, when the first and second electric potential has the same polarity with respect to the third electric potential; wherein the method comprises: applying a first variable high voltage, Vt, between the first electric potential and the third electric potential; applying a second variable high voltage, Vb between the second electric potential and the third electric potential; and applying a switchable ground connection to the third electric potential.

In an embodiment of the invention, the first variable high voltage, Vt, and the second variable high voltage, Vb, are the same variable high voltage and preferably a positive or negative voltage.

In an embodiment of the invention, the first variable high voltage, Vt, and the second variable high voltage, Vb, are discreetly switchable between n states.

In an embodiment of the invention, n is between 2 and 200, more preferably between 3 and 150.

In an embodiment of the invention, the switchable ground connection has two states:
a) a first state in which a ground connection is in a connected state, allowing for an electric current to flow from the respective first and second electric potentials in order to generate an electric field across the respective piezoelectric elements thereby causing their deformation, preferably a d31-mode deformation,
b) a second state in which a ground connection is in a disconnected state, allowing for no electric current to flow from the respective first and second electric potentials thereby preventing an electric field across the respective piezoelectric elements to be generated and thereby causing no deformation.

In an embodiment of the invention, a maximum deflection in an upper direction, ADₙ, corresponds to the ground connection in the connected state, and a maximum positive voltage Vb and Vt; wherein the maximum deflection-in a lower direction, AD₋ₙ, corresponds to the ground connection in the connected state, and a maximum negative voltage of Vb and Vt.

In an embodiment of the invention, the average deflection speed, vₙ, is defined by the positional difference between ADₙ and AD₋ₙ divided by a rise time, t, required to reach the respective maximum deflection state from the time of switching on the respective voltage; and wherein preferably the vₙ is between 0.025µm/µs and 100µm/µs, more preferably between 0.2 µm/µs and 37,5µm/µs.

In an embodiment of the invention, the maximum voltage Vbₙ and Vtn is between 20 and 250 Volt, more preferably between 40 and 200 Volt.

In an embodiment of the invention, ET is defined as ejection threshold for a downward deflection at which material is ejected from the printhead; and
wherein preferably ET is between 0,3µm and 40µm, more preferably between 1µm and 30µm.

1 In an embodiment of the invention, PT is defined as refilling threshold of the printhead in an upward deflection at which the ejection area is primed with material to be ejected; and wherein preferably PT is between 0,3µm and 40µm, more preferably between 1µm and 30µm.

In an embodiment of the invention, the first and second voltage and ground connection state are selected such that the actuator unit maintains a deflected state above ET for a duration between 0.2 to 75 microseconds.

In an embodiment of the invention, the first and second voltage and ground connection state are selected such that the actuator unit maintains a deflected state above PT for a duration between 0.2 to 70 microseconds.

In an embodiment of the invention, the first and second voltage and the ground connection state are selected such that the actuator unit is deflected with an average deflection speed between 0.025µm/µs and 100µm/µs.

In an embodiment of the invention, the first and second voltage and the ground connection state are selected such that the displacement of the actuator is below the speed of sound of the liquid material ejected from the printhead.

### Printhead structure

When referring to a printhead the following definitions of directions apply. The movement of the actuator generally defines an upward and downward direction, with the ejection being associated with a downward movement.

Perpendicular to the up- and downward direction a length direction of the printhead is defined, which is also the smaller dimension of the actuator and the larger dimension of the printhead. Consequently, the remaining direction is referred to as length direction of the actuator, which is the larger dimension of the actuator and the smaller dimension of the printhead.

It is noted, that said directions are merely defined in order to improve intelligibility of this description, any other coordinate system suitable for describing a 3D space can be used to identify directions and/or dimensions, in particular in the enclosed drawings.

In an embodiment of the invention, a printhead comprises a plurality of material ejection units. Each material ejection unit comprises at least one actuator unit. The material ejection units are preferably arranged in a side-by-side arrangement, i.e., such that the respective actuator units are arranged parallel to each other in the length direction of the printhead. Preferably, the material ejection units are formed in a common housing, i.e., the printhead housing.

In an embodiment of the invention, the printhead housing also comprises or partly comprises electromechanical components and/or fluidic components of one or more material ejection units.

In an embodiment of the invention, two or more actuator units form an actuator block. Preferably, one or more actuator blocks form an actuator assembly. The actuator assembly, the corresponding fluidic structure in the printhead housing, and corresponding electrical and fluidic connection means form the printhead.

A general embodiment of an actuator unit according to the present invention is shown in Fig. 6. A plurality of said actuator units, preferably 32 of said units, form an actuator block as shown in Fig. 8. A concatenation of a plurality actuator blocks forms an actuator assembly as shown in Fig. 9. A generally linear arrangement of actuator units/and or actuator blocks is preferred, but other arrangements such as zip-style, double-row or multi-row patterns are equally suitable and, depending on the application, may even form a preferred specific embodiment.

In the following, basic features will be described referring to the general embodiment and specific features referring to a specific embodiment. Unless otherwise indicated, or obvious to the skilled person, all features may be comprised in all embodiments.

In a preferred embodiment of the invention, one actuator block comprises 4 to 256, more preferably 32 actuator units. In a preferred embodiment of the invention, one actuator assembly comprises 1 to 16, more preferably 3 actuator blocks.

In an embodiment of the invention, the printhead housing comprises a space for housing the actuator assembly. The printhead housing may further comprises a fluidic structure corresponding to the actuator assembly.

In an embodiment of the invention, the fluidic structure comprises a material ejection structure with an ejection area for each actuator unit suitable for ejecting material based on a temporal pressurization caused by the respective actuator unit to the material in the ejection area.

The fluidic structure further comprises a material transport structure for transporting the ejection material to and from the respective material ejection areas.

In an embodiment of the invention, the material transport structure comprises one or more material inflow channels for transporting the material from an inflow connector to the one or more material ejection areas.

In an embodiment of the invention, the material inflow channel comprises at least one junction portions connecting at least one of the inflow and outflow channel at one or more positions in width direction, with a respective one of one or more inflow and/or outflow connectors.

Junctions are fluid conduit sections connecting one or more material inflow connectors to the material inflow channel at a point other than the end-points of said the material inflow channel, thereby causing a bifurcation of the material flow direction from the junction towards the inflow channel.

Further, junctions are fluid conduit sections connecting one or more material outflow connectors to the material outflow channel at a point other than the end-points of said the material outflow channel, thereby causing a merging of the multiple material flow directions towards the direction of the junction from the outflow channel.

In an embodiment of the invention, the material transport structure comprises one or more material outflow channels for transporting the material from the one or more material ejection areas to an outflow connector.

In an alternative embodiment of the invention, a plurality of material inflow connectors may be connected to the inflow channel, wherein the inflow channel comprises one or more junction portions, preferably in case of two or more junctions, spaced at equal distances along the length of the material inflow channel, and connecting the inflow channel to one respective inflow connector.

In an alternative embodiment of the invention, a plurality of material outflow connectors may be connected to the outflow channel, wherein the outflow channel comprises one or more junction portions, preferably in case of two or more junctions, spaced at equal distances along the length of the material outflow channel, and connecting the outflow channel to one respective outflow connector.

In an alternative embodiment of the invention, a plurality of material outflow connectors is connected to the inflow channel, wherein the outflow channel comprise connected outflow connectors preferably spaced at equal distances along the length of the material inflow channel.

In an alternative embodiment of the invention, the flow direction of the liquid material in the conduit structures between the inflow and outflow connectors may be reversed

In an embodiment of the invention, the material ejection areas are formed in a material ejection channel.

In an embodiment of the invention, the material transport structure is located below the actuator assembly and above the nozzle plate. The material transport structure has openings for the respective extension members of the actuator assembly to reach into the fluidic structure and to communicate with the respective material ejection areas.

In a preferred embodiment of the invention, the printhead housing is formed by stacking two or more plate-like elements above each other, thereby defining the above-mentioned spaces and/or fluidic structure. The plate-like elements may have one or more recesses and/or cutout sections to define the above-mentioned spaces and fluidic structure, when being attached to the respective other plates.

In other words, a central housing component may be formed by two or more adjacent plate-like structures with a complex in shape, which define a lateral cross section of a main housing structure.

The stacking of said plate-like elements enables a simplified production process of the printhead components via the use of one or more of the following methods: etching, laser ablation, disc cutting, injection molding, or milling. The aforementioned simplified production process allows to produce a multi layered conduit network for enabling a proper fluid distribution.

Furthermore, the alignment during the process of joining or adhering said components via adhesives or welding is enhanced by allowing for referencing each of the constituent parts of the fluidic plate along the x-y- plane during the production process.

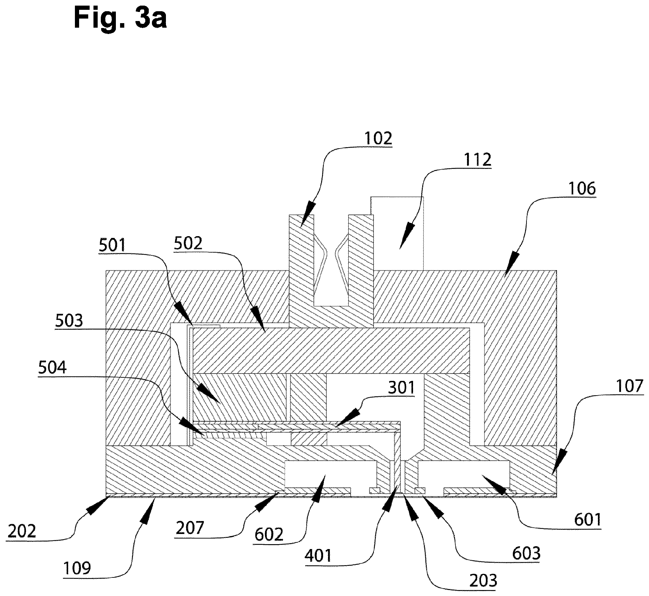

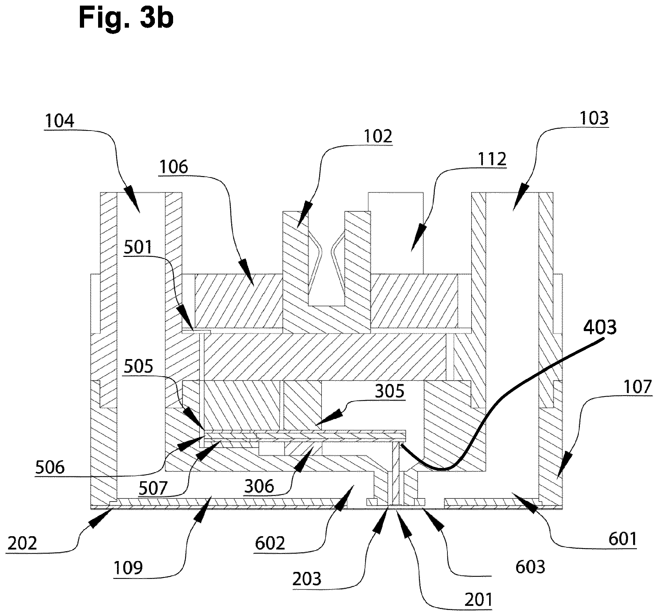

For the purpose of improved intelligibility of this description, in the following an ejection unit is considered to include an actuator unit and a portion of the lower plate stack corresponding to the width of the material ejection channel and two halves of the separating side walls of said channels formed in the fluidic plate as shown in Fig. 3a and Fig. 3b.

Specifically, an ejection unit may include a segment of the full channel width, and two half side wall widths of the elements present in the spacing element, a segment of the nozzle plate, a segment of the membrane element, a segment of the lower intermediate plate, a segment of the main fluidic plate, a segment of the heating plate, and the corresponding actuator unit.

However, since the ejection unit may not be a physically separate element of the printhead, the ejection unit may also be defined in any other way as long as the same structure of the printhead is obtained by concatenating said ejection units.

### Electromechanical Actuator Design

In order to improve the efficiency and/or quality of the printing process there is a need for a scalable printhead design. That is, to allow for a large number of material ejection units to be arranged relatively close to each other in a printhead and/or within one printhead housing.

A preferred spacing between the nozzle openings 201 of the material ejection units is 2 mm to 0.2 mm, more preferably 1.5 mm to 0.5 mm. A preferred number of material ejection units in a printhead is 32 to 256, more preferably 96.

It is a first core concept of the present invention, to provide a simplified mechanical and electrical actuator design. This allows for efficient concatenation of actuator units in a printhead and thus for a reduced spacing and for a high native resolution printing head.

It is a second core concept of the present invention, to provide a simplified fluidic design of the material cycling system. This allows for efficient concatenation of actuator units in a printhead and thus for a reduced spacing and for a higher native resolution printing head.

It is a third core concept of the present invention, to provide a simplified driving method for the printhead. This allows for efficient drop ejection and thus for a reduced spacing and for a higher native resolution printing head.

In the above the term "a higher native resolution" is relative to other high viscosity capable systems. High DPI normally is considered more than 800 DPI. The present invention has performed at 20 DPI, which is an improvement from typically 10 DPI obtained from said other high viscosity capable systems.

In embodiments of the present invention, the actuator is formed as a cantilever actuator with a stiffening element, also referred to as spacing element.

The stiffening element is connected at an upper or lower surface of the piezoelectric element. Said connection provides the piezoelectric element with an elastic mechanism to translate a d31 deformation into an essentially orthogonal deformation via a differential expansion of the piezoelectric element and the stiffening element at the connecting boundary.

The stiffening element further provides a spacing between two or more piezoelectric elements adhesively bonded to the upper and lower face and increases the width and therefore the rigidity of a stack of stiffening elements that are rigidly bonded to said stack. In a preferred invention the stiffening element is non-conductive and may consist of one or more of a glass fiber material, a carbon fiber material, a metal oxide material, a composite material, or a ceramic material

The electrical connection of said actuator is configured to easily adjust the displacement of the actuator by using the switching of a switch that connects the stiffening element via a ground line to ground, thereby displacing the actuator via extension and contraction of a piezoelectric element with a voltage potential generating an electrical field from a piezo electrode to the stiffening element.

The electrodes discussed in this disclosure to be formed on the piezoelectric element are preferably covering the top and/or bottom surfaces of the piezoelectric element and are preferably formed by a conductive thin film.

Said displacement of the actuator is driven by a positive and negative voltage being applied to the top and bottom piezo electrodes, preferably at the same time. A difference in displacement direction of the piezoelectric elements in response to the same voltage values applied the top and bottom piezo electrode is achieved via a selection of the respective polarization of the top and bottom piezoelectric elements, hereinafter alternatively referred to as the lower piezoelectric elements.

The polarization is selected to be in the same direction, preferably a downward direction, causing the electrical field for one piezo to be applied in an essentially parallel direction to its polarization while the electrical field applied to the other piezoelectric element is applied in an essentially antiparallel direction to its polarization.

By being able to switch the values of one or more high voltage signals between multiple states, while independently switching the ground switch between an open and closed state, a temporal forming, also referred to as shaping, of the actuation speed can be achieved.

This temporal forming leads to an improved adaptability for highly viscous materials with a complex rheology. Furthermore, this allows to compensate for individual nozzle performance, without the use of complex drive electronics such as FPGA. In particular, the present invention allows for multi-pulse based control, without the need for highly complex drive electronics and instead using fast switching ground gates.

The temporal shaping of the actuator displacement, and preferably a large displacement amplitude, are key elements for achieving high viscosity ejection.

In a printhead according to the present invention, said pumping displacement is sustained for a longer period than is normal in some other printheads due to a longer temporal vertical displacement, following a variable speed., thereby allowing for a pressurization to be held for an elongated period with respect to the normal pressurization times in other printheads.

Furthermore, an elongated pressurization of the liquid material mainly in the sub-sonic regime leads to a different drop formation and drop release of liquid material on the underside of the nozzle.

Therefore, a short pressure front is created, which in turn imparts a portion of its energy, preferably a substantial part thereof, at the liquid gas interface of the meniscus, thereby leading to an expansion of the meniscus and causing the formation and expulsion of a droplet.

This allows the material to flow out of the nozzle and form a droplet, while controlling the size and point of release through waveform modulation and/or multiple actuations.

The cantilever configuration according to the present invention allows for a similarly large displacement as previous actuator designs but with a far smaller footprint, e.g., 4 mm to 6 mm by 1mm, compared to 8mm to 10mm by 2mm of a previous design. Furthermore, comparable results may be obtained at much lower voltages, e.g. ±150 volts instead of the previous ±200 volts.

Still further, according to the present invention, a highly reduced harmonic resonance is obtained.

In embodiments of the present invention, the displacement of the actuator is still mostly vertical. However, due to the geometry of the actuator, a radial displacement and therefore an essentially lateral displacement of the extension member lower surface may be introduced.

With respect to a multi actuator unit, according to the present invention, allows for a very simplified production and adhesion process, which is fully modular and can be scaled indefinitely.

### Fluidic Design

As discussed above, the actuator unit according to the present invention comprises preferably a piezo system with delicate electrical and/or mechanical components. Furthermore, a high voltage is used to actuate the one or more piezoelectric elements of the piezo system. Therefore, it is desirable that the liquid in the printhead does not contact the actuator assembly.

Furthermore, since the liquid is preferably heated to maintain a certain viscosity, an excessive heat transfer from the liquid to the actuator and vice versa should be prevented. However, at the same time also an efficient impulse transfer should be maintained, which requires a direct contact between the actuator assembly and the liquid.

It is a core concept of the present invention, to provide a membrane in the printhead to separate the liquid from the actuator. Embodiments of the present invention relate to different variants and placements of said membrane.

In the embodiments of the present invention, the membrane prevents the liquid material to be in contact with the actuator, thereby reducing the heat transfer and the need for coating of actuator components to prevent electrical shorts.

Furthermore, the membrane according to the present invention allows for a more efficient pressurization of a pressurization area, i.e., in the ejection area, and a better refilling or priming, that is removal of entrapped gas from the pressurization area.

It is noted that generally the term priming refers the elimination of any two-phase gas-liquid flow regimes from a geometry by introducing material into said geometry. More specifically, in the context of the present invention, said geometry may be the ejection area, also referred to as virtual chamber during the process of a positive pressurization, which is, the pressurization of the pressurization area relative to an ambient pressure or the back-pressure of the printhead when the actuator is not experiencing any deflection from its neutral state.

Said primed ejection area needs to contain liquid material to be ready to undergo a positive pressurization for the purpose of ejecting the material, while only affecting the motion of a gas-liquid two-phase interface in or in close proximity to a corresponding nozzle opening during said pressurization, also referred to as forming of a meniscus.

In other words, said geometry is required to be completely wetted or filled with the liquid material, with no enclosed pockets of gas or vacuum remaining in the primed geometry. In the case of a buildup of a gas entrapment within the internal geometry, for example by way of under-pressurization and ingestion of gas, a priming would need to occur in order to ensure no performance degradation during the ejection process.

Refilling refers to the repeated supply of material of an area specifically in the context of an alternating state, where material has been ejected from an area and needs to be reintroduced without forming any enclosed two-phase flow regimes within the refilled area, preventing starvation of the ejection area.

Refilling in the context of the present invention generally, at least partially, occurs during an opposing and negative pressurization with respect to the pressurization with the purpose of ejecting a liquid material.

In embodiments of the present invention, multiple ejection units are concatenated, and the respective channels connect and form together with optionally the membrane and other auxiliary components such as connectors to a material cycling system. The material cycling system is configured to transport liquid material to and from the respective ejection areas.

With respect to the inflow and outflow channels, there is a respective positive and negative pressurization. The pressurization creates a differential pressure and subsequently a flow of material at a relative pressure that is lower than the ambient pressure but not so low as to draw in gas bubbles through the nozzle openings and not so high as to cause material to leak from the nozzle openings.

In embodiments of the invention, a continuous measurement of pressure may be performed at or in close proximity to the highest and lowest pressurization areas within the material cycling system. Specifically, the measurement is performed within a section of a material conduit, situated between a pump generating a positive pressure and the printhead and/or within a section of a material conduit between a pump generating negative pressure and the printhead.

This enables an electrical adjustment of the pressurizing pumps to adjust their relative pressures according to a referenced material and according to its properties at a respective temperature. The respective temperature may also be measured and adjusted via the internal heating plate inside the printhead, or additional heating elements formed in the material supply system.

This results in keeping a steady minimum rate of material flow in the material cycling system according to the aforementioned criteria.

In a first embodiment of the invention, the respective fluid channels are formed to have a constant cross section and a bypass structure with a decreased cross section, as to provide an equalization of flow rate and pressure of the material present in the ejection channels during the recirculation of the material. In this configuration an equal refilling of all the ejection areas present may be possible.

In a second embodiment of the invention, the respective fluid channels are formed with a gradual decrease in inflow channel volume according to an increased distance from the material inflow connector and a corresponding increase in the outflow channel volume according to an increased distance to the material inflow connector.

That is, the cross section of the respective channels is gradually changed, preferably along the length direction. This allows for an improved equalized pressurization and rate of flow of the liquid material present in the channel manifold between the inflow and outflow channels.

### Nozzle Plate displacement

In embodiments of the invention, the nozzle plate is configured to be displaced during the ejection of the material. The displacement may occur due to the pressurization originating from the from the actuator displacement in the liquid material in close proximity of the nozzle plate, thereby inducing an essentially parallel displacement of a section surrounding the nozzle opening to the ejection direction and transferring displacement energy into material present on the underside of the nozzle plate during the ejection process.

This may result in an increased ejection performance as it may aid in the fluid thread release or pinch off of ejected material at very high viscosity or for material with very high viscoelastic properties.

### Brief Description of the Drawings

In the drawings:

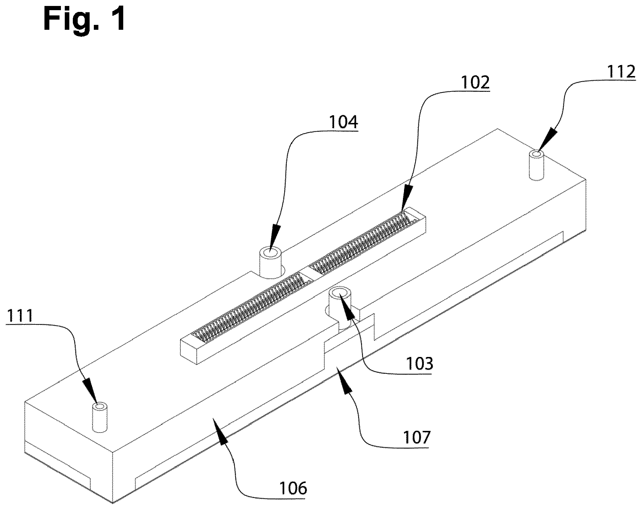

- Fig. 1: shows a printhead according to an embodiment of the invention from an isometric top angle view;

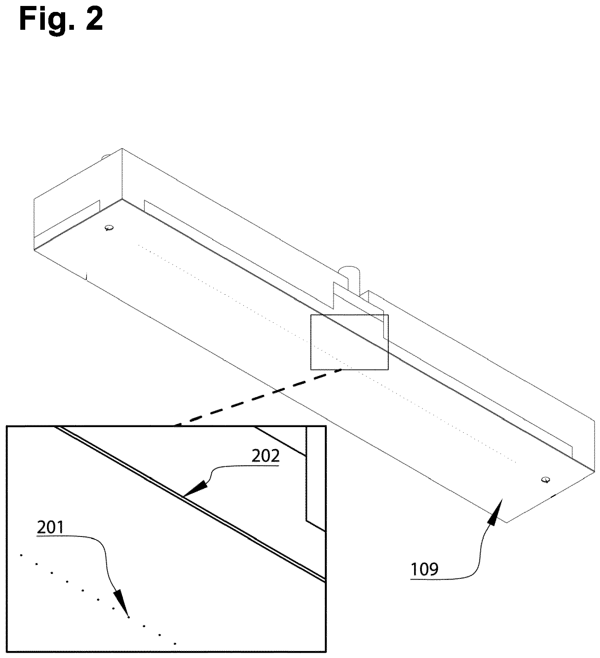

- Fig. 2: shows a printhead according to an embodiment of the invention from an isometric bottom angle view;
- Fig. 3a: a shows a cross sectional view of a printhead according to an embodiment of the invention cut along the direction of an actuator;
- Fig. 3b: shows a cross sectional view of a printhead according to an alternative embodiment of the invention cut along the direction of an actuator;

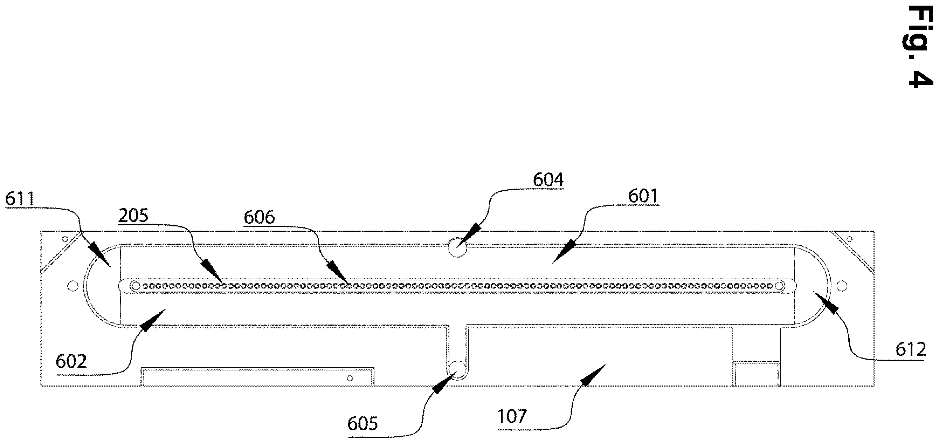

- Fig. 4: shows the bottom side of a printhead according to an embodiment of the invention with the fluidic plate open;

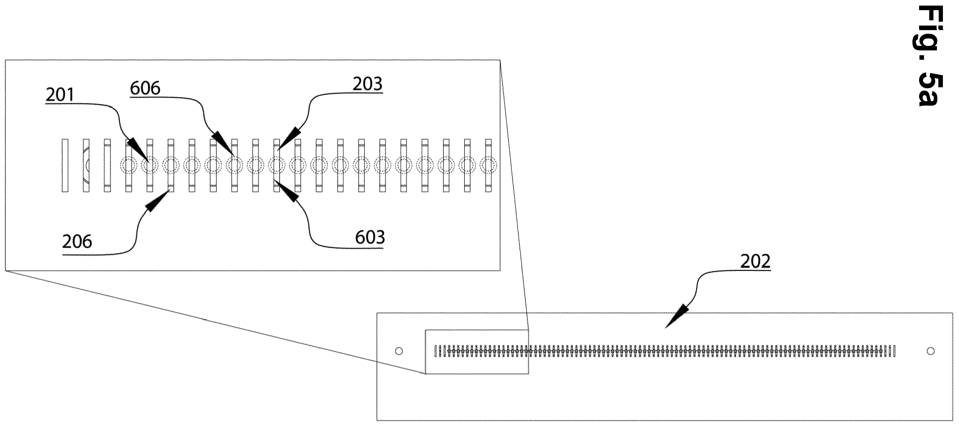

- Fig. 5a: shows the bottom side a printhead according to an embodiment of the invention with the spacing element present;
- Fig. 5a: shows the bottom side a printhead according to an embodiment of the invention with the spacing element present and recessed channel structure of the fluidic plate shown in dashed lines.

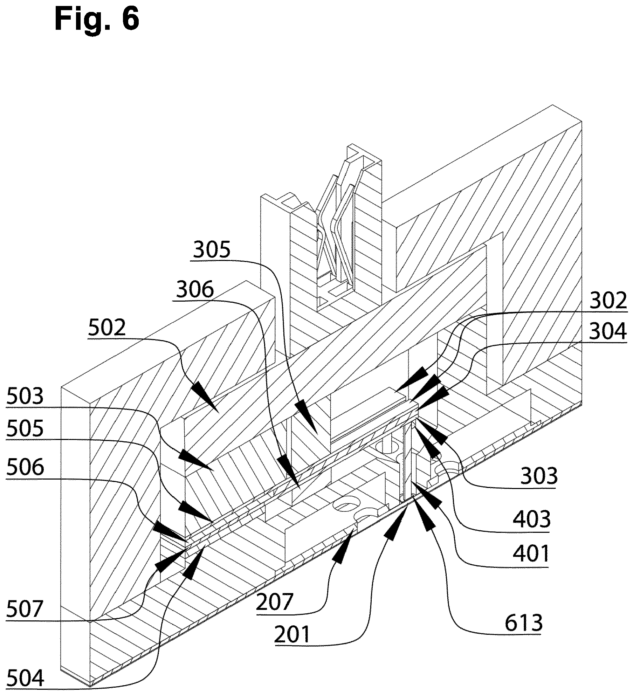

- Fig. 6: shows a diagonal isometric view of a cross section of a printhead according to an embodiment of the invention cut along the actuator length direction;

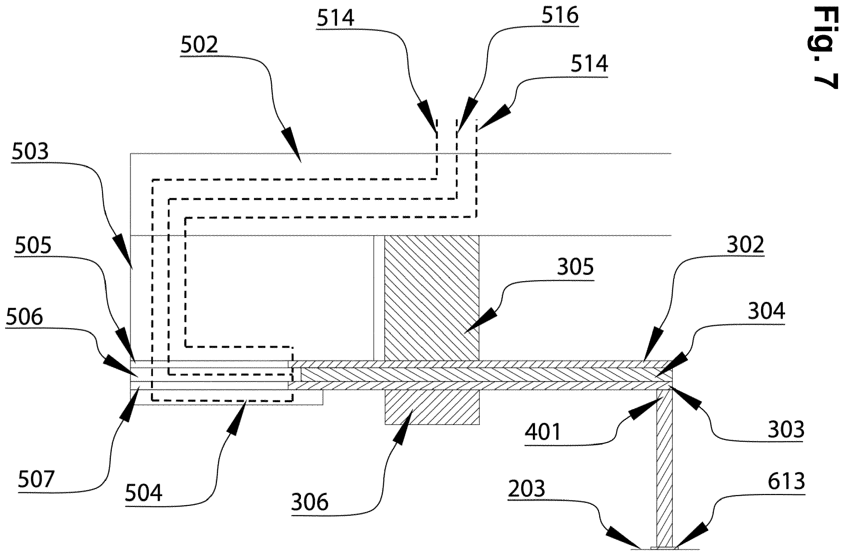

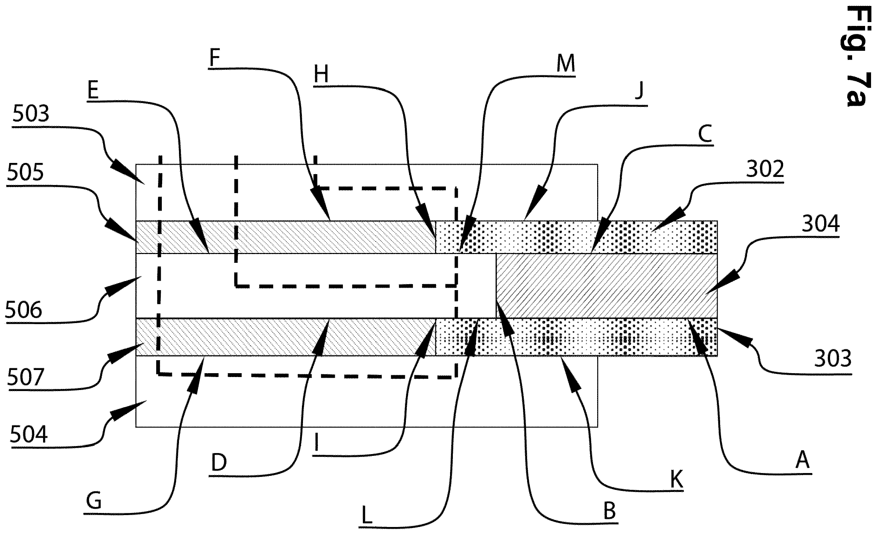

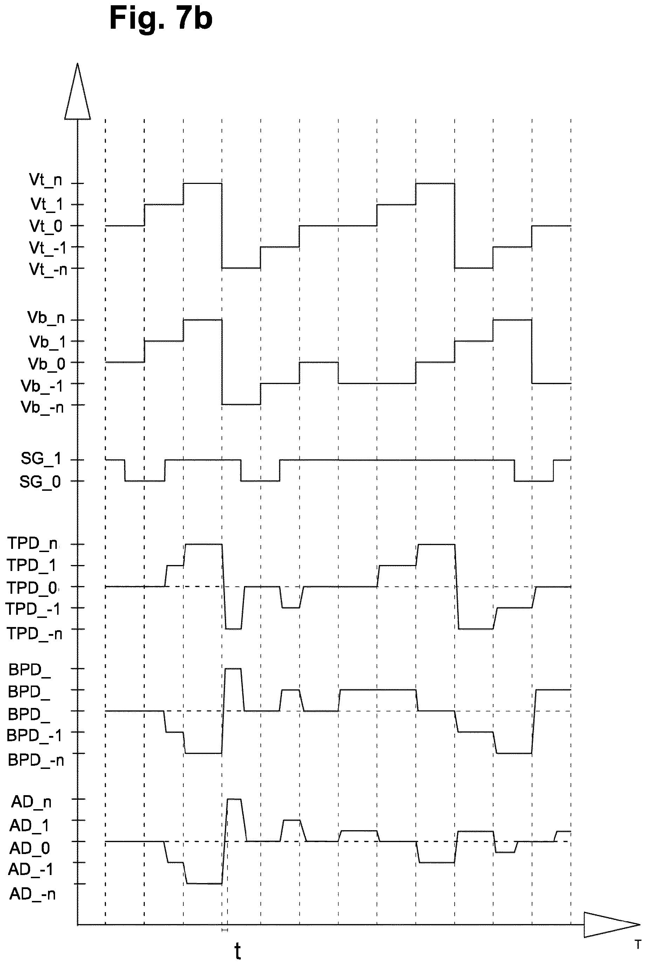

- Fig. 7: shows a cross-sectional view of the actuator unit an according to an embodiment of the invention;
- Fig. 7a: shows a layered structure of the actuator unit according to an embodiment of the present invention;
- Fig. 7b: shows a diagram of driving signals applied to the actuator unit and the corresponding actuator displacements over time according to an embodiment of the invention;

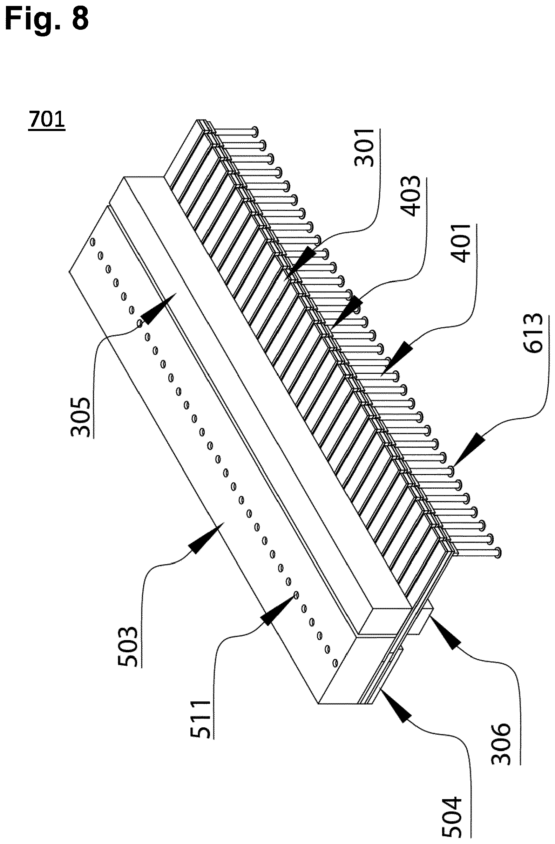

- Fig. 8: shows an actuator block according to an embodiment of the invention from an isometric top angle view.

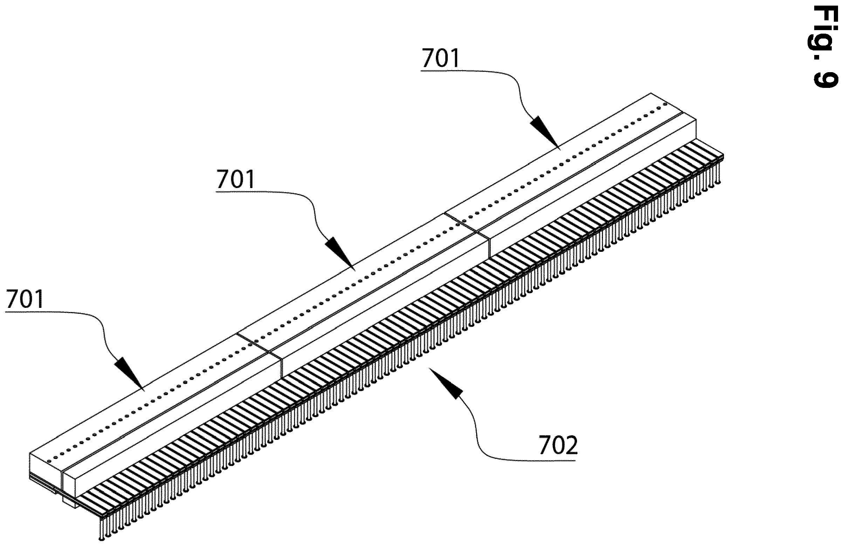

- Fig. 9: shows an actuator block assembly according to an embodiment of the invention from an isometric top angle view.

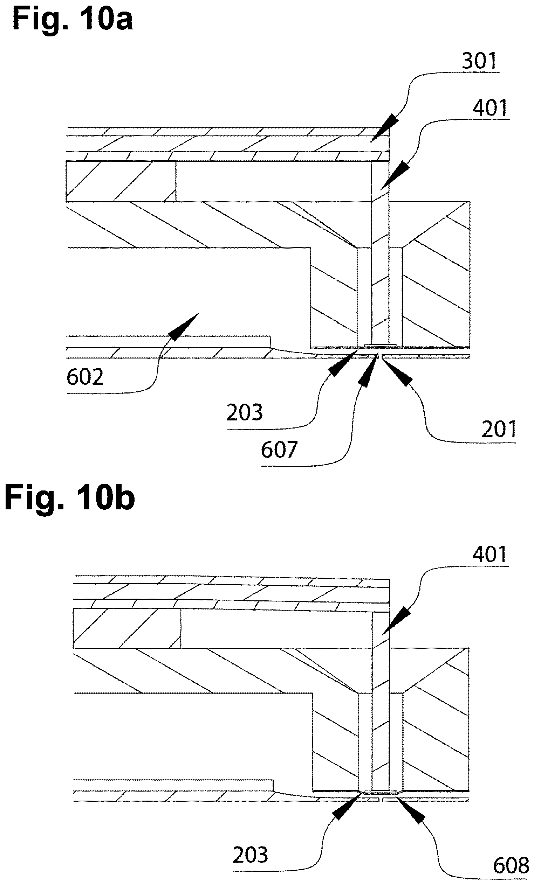

- Fig. 10a: shows a schematic side view of a printhead according to a first embodiment of the invention with an extension member in a neutral position;
- Fig. 10b: shows a schematic side view of a printhead according to the first embodiment of the invention with an extension member in a deflected position;

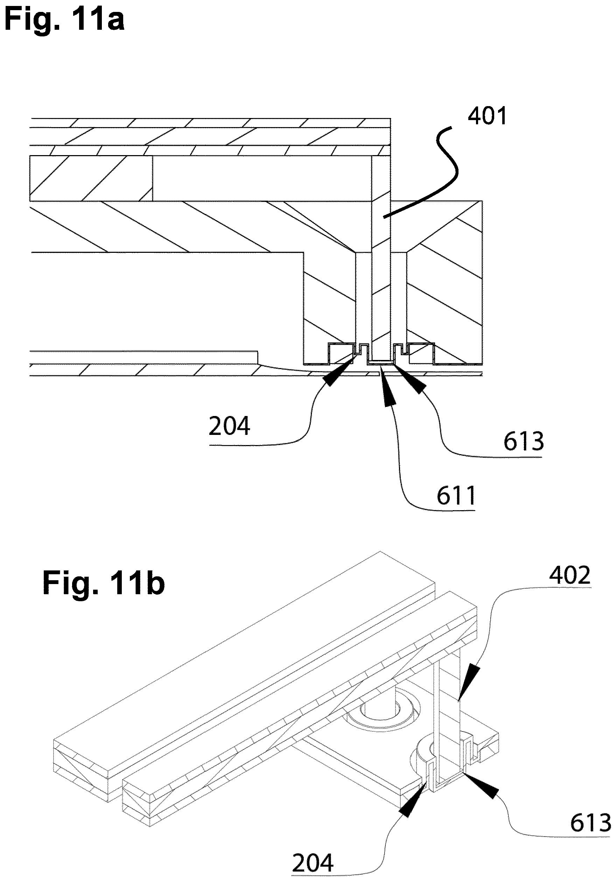

- Fig. 11a: shows a schematic side view of a printhead according to a second embodiment of the invention;
- Fig. 11b: shows a printhead according to the second embodiment of the invention from an isometric top angle view;

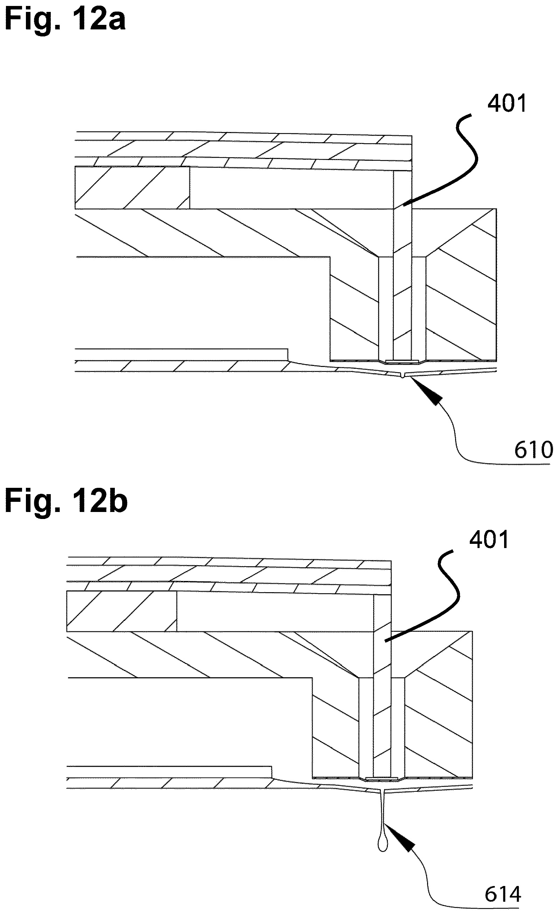

- Fig. 12a: shows a schematic side view of a printhead according to the first embodiment of the invention with an extension member in a deflected position;
- Fig. 12b: shows a schematic side view of a printhead according to the first embodiment of the invention with an extension member in a deflected position;

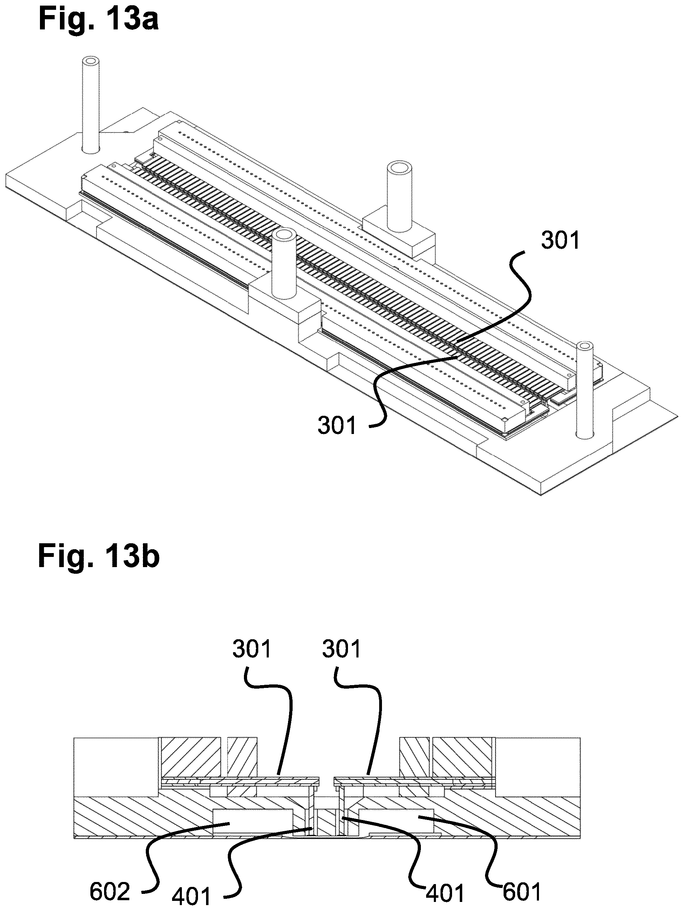

- Fig. 13a: shows a printhead according to a third embodiment of the invention from an isometric top angle view;
- Fig. 13b: shows a schematic side view of a printhead according to the third embodiment of the invention;

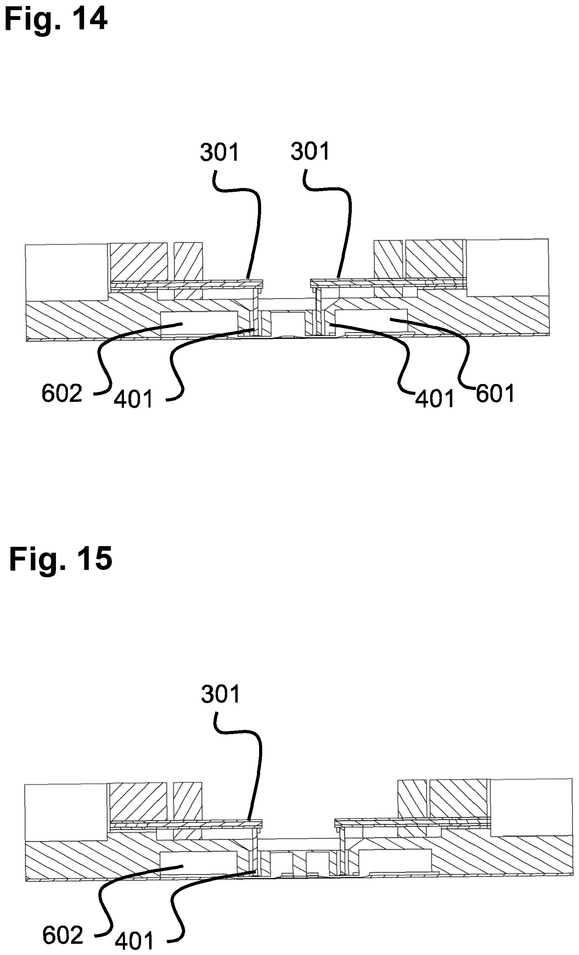

- Fig. 14: shows a printhead according to a fourth embodiment of the invention in a cross-sectional view;
- Fig. 15: shows a printhead according to a sixth embodiment of the invention in a cross-sectional view;

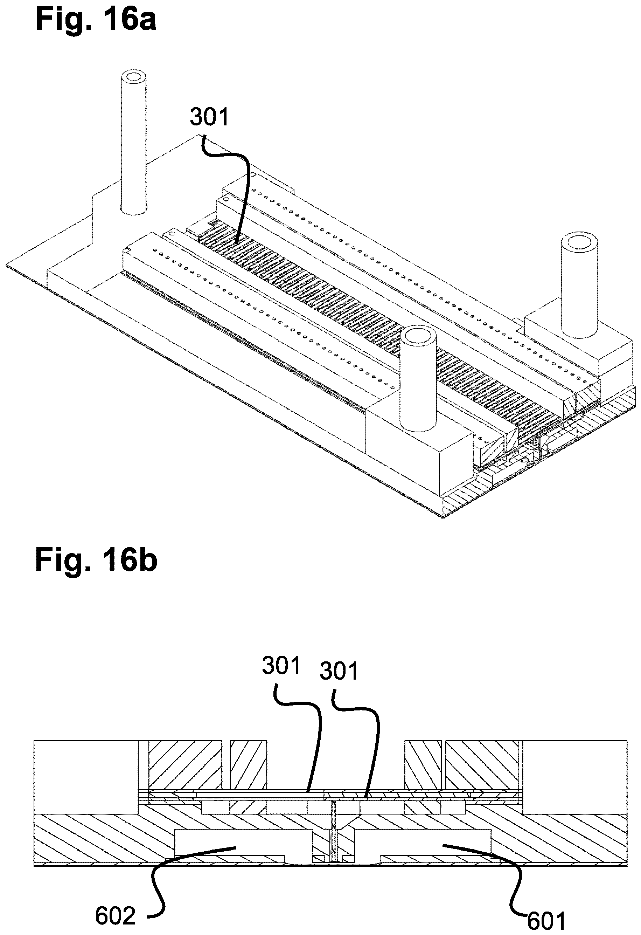

- Fig. 16a: shows a printhead according to a seventh embodiment of the invention from an isometric top angle view; and
- Fig. 16b: shows a cross-sectional view of a printhead according to the seventh embodiment of the invention.

### Detailed description of the Drawings

In the following, embodiments of the present invention will be described It is noted that some aspects of every described embodiment may also be found in some other embodiments, unless otherwise stated or being obvious to the skilled person. However, for increased intelligibility, each aspect will only be described in detail when first mentioned and any repeated description of the same aspect will be omitted.

Fig. 1 shows a printhead according to an embodiment of the invention from an isometric top angle view. The printhead comprises a housing, fluidic connectors for inputting and removing liquid material, vacuum connectors and electrical connectors for providing electrical signals to the actuator units of the actuator assembly inside the housing.

As detailed above, in a preferred embodiment of the invention, the printhead is formed by different plate-like elements stacked in a vertical direction, i.e., along the ejection direction of the printhead. This design allows for an improved assembling process because each plate like element can be referenced independently.

In Fig. 1 the printhead comprises a main fluidic plate 107 and a case element 106. Furthermore, the printhead comprises an electrical connector 102, a material inflow connector 103, a material outflow connector 104, a first vacuum connector 111, and a second vacuum connector 112.

The electrical connector 102, the material inflow connector 103 the material outflow connector 104, the material inflow connector 103 and the material outflow connector 104 may be provided protruding upward from the top surface of the case element 106. The structural and functional interrelation of said components will be discussed below.

Fig. 2 shows a printhead according to an embodiment of the invention from an isometric bottom angle view. Underneath the main fluidic plate 107, see Fig. 1, a spacing element 202 is provided. Under the spacing element 202 a nozzle plate 109 is provided.

As detailed in the enlarged section of Fig. 2, in the nozzle plate 109 one or more nozzle openings or ejection openings 201 are provided.

Fig. 3a, and Fig. 3b each show a cross sectional view of a printhead according to an embodiment of the invention cut along the direction of an actuator.

With reference to Fig. 1 and Fig. 2, the printhead comprises the electrical connector 102, the main case 106, a top PCB (printed circuit board) plate 502, a middle PCB plate 503, a lower PCB plate 504, the second vacuum connector 112, a heating plate 207, the main fluidic plate 107, an actuator 301, an inflow channel 601, an outflow channel 602, a material ejection channel 603, a membrane 203, the spacer element 202, the nozzle plate 109 and the actuator 401.

It is noted that the first vacuum connector 111, the material inflow connector 103 and the material outflow connector 104 and their respective conduit connections are not shown in Fig. 3a.

Inside the printhead, preferably in a space defined by the main fluidic plate 107 and the case element 106, an actuator 301 with an extension member 401 is provided. The extension member 401 extends from the actuator 301 to or into the material present in the main fluidic plate 107. The actuator in a length direction has one fixed end portion, which is fixed with respect to the housing. Furthermore, the actuator in a length direction has one free end portion, which is able to deflect up and down and thus actuate the extension member.

As mentioned above, additionally or alternatively a top PCB plate 502 may be provided to enclose the actuator 301 in conjunction with a middle PCB plate 503, a lower PCB plate 504, and the main fluidic plate 107.

The top PCB plate 502, the middle PCB plate 503, and the lower PCB plate 504 preferably comprise conductive connecting elements allowing for an electrical signal to pass from the electrical connector 102 to the actuator 301, to the heating plate connecting element 501 and/or further elements inside the printhead.

The main fluidic plate 107 may also comprise one or more fluid connector elements for providing the liquid martial to the printhead and for removing it therefrom, respectively.

In the main fluidic plate 107, several spaces for the liquid are provided, preferably defined by recesses in the main fluidic plate 107.

In detail, in the main fluidic plate 107 comprises a fluid inflow channel 601, a fluid outflow channel 602, and one or more material ejection channels 603. Each of the inflow/outflow channels extends along the lower surface of the main fluidic plate 107 in a direction perpendicular to the ejection direction and essentially parallel to the actuator concatenation direction. That is in a lengthwise direction of the printhead.

In an embodiment of the invention, the extension member 401 is positioned on the free end portion of the lower surface of the actuator, in order to achieve a maximum deflection.

In an alternative embodiment of the invention, as seen in Fig. 3b and Fig. 6, the extension member 401 is formed at a predetermined distance to the free end of the actuator and an additional referencing element 403 is positioned between the extension member 401 and free end.

More general, at least one additional referencing element 403 is provided to define the position of the extension member with respect to the end portion of the actuator. Said referencing element is configured to allow for simplified manufacturing.

Below the main fluidic plate 107, the spacing element 202 is provided. Above the spacing element 202, i.e., between the spacing element 202 and the main fluidic plate 107, a membrane 203 is provided and configured connect to the central surface of the main fluidic plate 107.

The main fluidic plate 107 preferably comprises respective pass through portion forming spaces in which the respective extension members are positioned to reach from a respective actuator 301 towards or into the ejection channel 603.

The membrane 203 is further connected to the lower surfaces of the extension member 401 and the surface of the main fluidic plate, which is defining the upper surface of the ejection channel 203.

The membrane 203 is configured to separate said pass through portions of the fluidic plate from the channels formed by the spacing element, thereby preventing liquid material present in the ejection channel 603 to enter the passthrough portion.

Fig. 3b shows a cross sectional view of a printhead according to an embodiment of the invention cut along the direction of an actuator with a referencing element 403. In detail, the drawing shows the inflow connector 103, the outflow connector 104, the inflow channel 601 and the outflow channel 602. As discussed above, the printhead further comprises a top referencing element 505, a middle referencing element 506 and a lower referencing element 507.

The inflow channel 601 is in fluid communication with the ejection channel 603 through the heating plate 207 (not shown in Fig. 3b), preferably via one or more holes in the heating plate.

The outflow channel 602 is in fluid communication with the ejection channel 603 through the heating plate 207, preferably via one or more through holes or openings in the heating plate.

In an embodiment of the invention, the channel structure, also referred to as conduits, and/or other elements of the fluidic structure are preferably manufactured by injection molding or laser ablation in a thermoplastic polyimide material or similar material in order to form the plate elements of the printhead. Alternatively, the structures may be etched into a metal substrate to form the plate elements of the printhead.

That is, according to the general invention, in the fluidic plate 107 two separate first channels are provided along the length direction of the printhead. Under the main fluidic plate optionally a membrane and a heating plate are provided. Under the main fluidic plate and the heating plate, a spacing element with a plurality of second channels, also referred to as material ejection channels, is provided.

Said second channels are preferably formed via through holes and/or recesses in the spacing element 202. The second channels are essentially perpendicular to the fist channels. The second channels are provided at positions corresponding to the extension members of the actuator units of the printhead, which extend through the pass through portion of the main fluidic plate.

Under the spacing element a nozzle plate is provided, which comprises a plurality of nozzle openings 201 positionally corresponding to the second channels.

One of the first channels is suitable for material inflow. That is, it is connected to an inflow connector and/or is formed for a material transport in an inflow direction.

The other one of the first channels is suitable for material outflow. That is, it is connected to an outflow connector and/or is formed for a material transport in an outflow direction.

The second channel is suitable for connection the two first channels. The first and second channels are in fluid communication, preferably through the optional heating plate. The fluid communication is preferably through respective holes in the heating plate.

That is, due to the arrangement of the first and second channels a pressurization area is formed. Further, an ejection area is formed under the lower surface of the extension member and above the nozzle opening 201.

Due to the plate-like structure the channels may be formed as cutouts and/or recesses in the respective plate-like elements or a combination thereof. During assembly, each plate-like element can be referenced separately. Thus, the material transport structure is assembled more efficiently and more accurately.

In an embodiment of the invention, the preferred dimensions of the first channel, which is the inflow channel, are a width of between 0.4mm and 10 mm and a height of between 0.4mm and 4.2mm, more preferably a width between 0.8mm and 7mm and a height of between 0.5mm and 3.8mm and a length which at least longer than the length of a concatenated channel ejection manifold.

In an alternative embodiment, the dimensions of the cross-sections of the first channels are changing, that is, the channels are convex and orthogonal to the general flow direction of said first channel and its length.

Said cross-sectional area having a relation of its major axis to its corresponding minor axis between 1 and 5 and an area of between 0.16 mm² and 42 mm², more preferably between 0.4 mm² and 26.6 mm². The length of said first channel being a length at least longer than the length of a 96-channel ejection manifold, that is at least 130 mm plus an additional space of 20 mm for containing one or more bypass structures around the channel ejection manifold.

In an embodiment of the invention, the preferred dimensions of the first channel, which is the outflow channel, are a width of between 0.4 mm and 10 mm and a height of between 0.4 mm and 4.2mm, more preferably a width between 0.8 mm and 7 mm and a height of between 0.5 mm and 3.8mm and a length which at least longer than the length of a concatenated channel ejection manifold.

That is, for a 96 nozzle manifold at least a length of 130 mm plus an additional space of 20 mm for containing one or more bypass structures around the channel ejection manifold.

In a preferred embodiment of the invention, the dimensions of a second channel are of its cross-sectional area, that is orthogonal to the general flow direction of said second channel and its length.

Said cross-sectional area having a relation of its major axis to its corresponding minor axis between 1 and 10 and a cross-sectional area of between 0.01 mm² and 0.45 mm², more preferably between 0.08 mm² and 0.3 mm². The length of said first channel being a length which at least longer than the length of a concatenated channel ejection manifold.

In an embodiment of the invention, the preferred dimensions of the second channels (i.e., manifold channels or ejection channels) are a width between 0.7 mm and 1.2 mm and a height of between 0.1 mm and 0.35 mm, more preferably a width between 0.8 mm and 1.3 mm and a height of 0.14 mm and 0.25 mm and a length of at least 3.4 mm.

In an alternative embodiment of the invention, the second channels comprise essentially parallel and narrower third channels recessed and/or cut at a central portion of the second channel. Said third channels have a smaller width than the second channels and are a width between 0.1mm and 1mm and a height of between 0.01 mm and 0.09 mm, more preferably a width between 0.2 mm and 0.8 mm and a height of 0.02 mm and 0.07 mm. The channel width may vary within said values along a lengthwise direction of said third channel.

As mentioned above, in an embodiment of the invention, the respective fluid channels are formed with a gradual decrease in inflow channel volume according to an increased distance from the material inflow connector and a corresponding increase in the outflow channel volume according to an increased distance to the material inflow connector.

That is, the cross section of the respective channels is gradually changed. This allows for an equalized pressurization of the liquid material present in the channel manifold between the inflow and outflow channels.

In a preferred embodiment of the invention, the inflow channel has dimensions of a height of 1.9 mm and a width of 6 mm along the length of the inflow channel.

In an alternative embodiment of the invention, the dimensions of a first channel are of its cross-sectional area, that is convex and orthogonal to the general flow direction of said first channel and its length. Said cross-sectional area having a ratio of its major axis to its corresponding minor axis between 1 and 5 and an area of between 10 mm² and 16 mm² along the length of the inflow channel.

In an alternative embodiment of the invention, the inflow channel has dimensions of a height of 1.9 mm and width of 6mm at the inflow connector of the printhead, said dimensions are reduced to a height of 0.19 mm and a width of 1mm at the opposite end.

Alternatively, in an alternative embodiment of the invention, the dimensions of a first channel are of its cross-sectional area, that is convex and orthogonal to the general flow direction of said first channel and its length. Said cross-sectional area having a relation of its major axis to its corresponding minor axis between 1 and 5 and an area of between 10mm² and 16mm² at the inflow end of the printhead and is reduced to an area of between 0.1mm² and 0.2mm² at the opposite end.

Correspondingly, the outflow channel dimensions of a height of 0.18 mm and a width of 0.8mm at the inflow end of the printhead are increased to a height of 3.7 mm and width of 3.7mm at the opposite end.

Alternatively: Correspondingly, the second channel dimensions are of its cross-sectional area, that is convex and orthogonal to the general flow direction of said second channel and its length. Said cross-sectional area having a relation of its major axis to its corresponding minor axis between 1 and 5 and an area of between 0.1mm² and 0.2mm² at the inflow end of the printhead and is increased to an area of between 10mm² and 16mm² at the opposite end

The above example is for a rectangular cross-section. However, in other embodiments of the invention other cross-section shapes are possible.

That is, in a preferred embodiment of the invention, the cross-section size of the inflow channel is reduced to about 1 % from the first end to the second end. The cross-section size of the outflow end is increased accordingly.

Alternatively, in a preferred embodiment of the invention, the cross-section size of the inflow channel is reduced to about 1/x, where x is the number of channels present in the channel manifold along its length, from the first end to the second end. The cross-section size of the outflow end is increased accordingly.

In a preferred embodiment of the invention, the cross-sectional area reduction is non-uniform with respect to the major and minor axis along the axis of the general flow direction. That is, the height is reduced to about 4.8% and the width to about 21%.

The reduction/increase is preferably performed in an essentially linear way.

In an embodiment of the invention, a heating plate 207 may be provided below the fluidic plate 107 and above the spacing element 202. Alternatively, the membrane element 203 further comprises a heating portion embedded within.

Said heating plate is connected to the top plate or top PCB via a heating plate connecting element 501. The heat emission is adjusted via a pulse width modulation of the voltage. In an alternative embodiment of the invention, the heat emission is adjusted via a variable voltage. The heating plate is configured to transfer heat into the liquid material primarily present in the conduits of the fluidic plate 107 and the spacing element 202.

The actuator 301 comprises one or more piezoelectric elements. The piezoelectric elements are connected to the electrical connector 102 via a flexible printed circuit board 501, flex PCB.

This configuration allows for an improved expandability based on placing actuators in close proximity to each other. Thus, allowing for the formation of pre-fabricated actuator blocks and further allowing for a concatenation of said actuator blocks in order to obtain variable sizes of actuator assemblies in variable printhead widths.

Furthermore, this configuration allows for a simple affixation of the actuator unit to the fluidic plate and/or, in an alternative embodiment of the invention, to a holding element, essentially affixing the actuator at a specific point for the purpose of having a precise deformation of the non-affixed actuator portion.

This effectively leads to an improved uniform displacement range of the extension member for the same electrical signal being applied.

Fig. 4 shows the bottom side of a printhead according to an embodiment of the invention with the fluidic plate 107 being visible. That is, the underside of the fluidic plate 107 is shown.

The fluidic plate 107 comprises the fluid inflow channel 601 and the fluid outflow channel 602. The inflow and outflow channels are connected to respective one of an inflow connecting point 604 and an outflow connecting point 605. The inflow and outflow channels are preferably formed as a recess in the fluidic plate 107.

The inflow and outflow channels are preferably configured to enable liquid material to flow through openings in the heating plate, the spacing element and/or nozzle plate, or another element fixed below (not shown) the mean fluidic plate 107. The geometry of the inflow and outflow channels may be optimized as described below.

In a preferred embodiment of the invention, under a generally central portion of the fluidic plate 107, the membrane 203 and under the membrane, a spacing element 202 is provided to define a part of the fluid transport structure of the printhead containing the pressurization area. Under the spacing element the nozzle plate with corresponding nozzle openings is provided.

In a preferred embodiment the membrane is of a thickness of between 7µm and 100µm, preferably between 10µm ad 50µm and is made of one or more of a polyimide, PTFE, PFA, FEP, or ETFE polymer material.

In a preferred embodiment of the invention, the inflow and outflow channels are connected via the ejection channels and one or more bypass sections 612 and 611 that allow material to flow directly from the inflow channel into the outflow channel. Said bypass sections are preferably of an equal or lesser cross sectional area than the cross sectional areas of the inflow and outflow channels.

Furthermore, the fluidic plate 107 comprises extension member through openings 206 configured to accommodate the extension members or at least an end portion 606 of the extension members of a respective corresponding actuator unit arranged above the fluidic plate 107.

Fig. 5a shows the bottom side a printhead according to an embodiment of the invention with the spacing element 202 present and the lower surface in contact with the membrane as well as the pass through portion in contact with the membrane in dashed lines.

In an embodiment of the invention, the membrane is bonded to an area of the main fluidic plate 107 surrounding the pass through portions, in which the extension members reside and the lower surface of the extension member. Said membrane is elastic and is thereby experiencing a partial displacement during the actuation of the extension member by the actuator within the area covering the pass through portions.

In an embodiment of the invention, the lower surface of the membrane is bonded to a lower intermediate plate 613, which is directly attached to the lower surface of the extension member and may have a different diameter or shape than the lower surface of the extension member. A displacement of said lower intermediate plate 613 via the extension member is causing a deformation of the membrane.

Optionally a lower intermediate plate 613 may be used due to a more efficient production method of a membrane or a shaped membrane that is precisely adhered with the actuator unit, see Fig. 11a.

In an embodiment of the invention, the spacing element 202 is provided below the fluidic plate 107. The spacing element 202 further comprises recesses and/or through holes defining material ejection channels with a non-rectangular cross-sectional area.

In an alternative embodiment of the invention, the spacing element 202 comprises through holes defining the material ejection channels 603 under the membrane 203, wherein the defined material ejection channels have a rectangular cross sectional area.

As detailed above, the material ejection channel 603 of each ejection unit is in fluidic communication with each of the inflow and outflow channels, preferably via holes in the heating plate 207. The shape of the membrane may be optimized as detailed below.

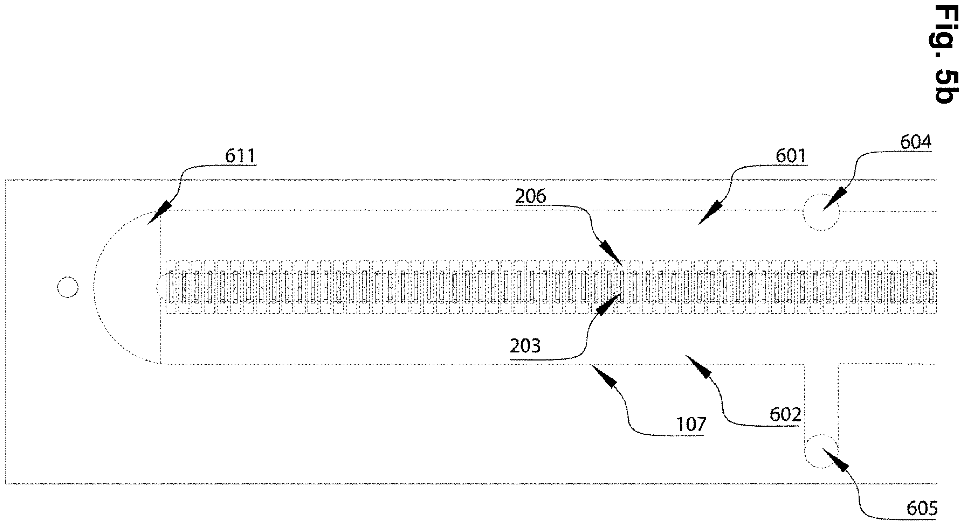

Fig. 5b shows the underside a printhead according to an embodiment of the invention with the spacing element 202 present, with the recessed channel structure of the fluidic plate 107 in dashed lines and with the recessed channel structures and through holes present in the spacing element 202.

As detailed above, the spacing element 202, the membrane 203 and above the membrane 203 the fluidic plate 107 are provided. In the fluidic plate 107, the inflow channel 601 and the outflow channel 602 are formed in a lengthwise direction of the printhead, i.e., in a concatenation direction of the actuator assembly.

Applicants have realized that the flow velocity in the ejection channel 603 is linked to the back-pressure at the nozzle openings. Thus, a compromise between ideal flow rate and pressure variance is necessary.

In order to overcome the above problem one or more bypass sections are provided between the inflow and outflow channel. The bypass sections allow to control the flow rate and the back-pressure independently form each other. That is, for all nozzle opening an even back-pressure can be obtained, while the flow rate can be increased.

In a preferred embodiment the bypass sections have a height dimension between 0.18mm and 2mm and having a width dimension between 0.8mm and 6mm and may have a length dimension from 6mm to 20.3mm.

A first bypass section 611 is indicated, passing around the ejection channel manifold and connecting the inflow and outflow channels. A second bypass section (not shown) is preferably arranged in a symmetric fashion with respect to a first bypass section.

In the spacing element 202, which is provided below the membrane 203, a plurality of ejection channels 603 are provided in correspondence with each of the ejection units. The ejection channels 603 are provided in a direction perpendicular to the channels of the fluidic plate 107.

That is, each ejection channel 603 connects the inflow channel 601 and the outflow channel 602 at the location of a respective ejection unit. That is, the ejections channels 603 are provided at a position corresponding to the lower portion the extension member 606 passing through the fluidic plate or are contacting the membrane 203 at an extension member opening 207 of the fluidic plate 107.

As detailed above, at the intersection of the respective one of the inflow and outflow channels and the ejection channel 603 the channels are in liquid communication, preferably a heating plate through opening, is provided for liquid communication between the respective channel and the ejection channel 603.

Fig. 6 shows a diagonal isometric view of a cross section of a printhead section according to an embodiment of the invention, cut along the actuator length direction.

That is, a segmented cross-section of the printhead is shown, which essentially is a 3-dimensinonal interpretation of Fig. 3 and illustrates the 3-dimensional structures formed by stacking the different plates of the printhead.

As detailed above, the section shown in Fig. 6 can be concatenated any number of times in order to scale the size, i.e., number of ejection units, of the printhead.

In a preferred embodiment of the invention, the plate elements have one or more of the following thicknesses:
- General thickness of the platelike portions of the main fluidic plate 107: between 1 mm to 6mm, preferably between 1.5mm to 5mm, most preferably between 2.5 and 4 mm.
- Membrane 203: between 0.005 mm to 0.07 mm, preferably between 0.008 mm to 0.05mm, most preferably 0.01 mm to 0.025 mm.
- Spacing element 202: between 0.1 mm to 0.25 mm, preferably between 0.12 mm to 0.22mm, most preferably between 0.15 mm to 0.21 mm.
- Nozzle plate 109: between 0.01 mm to 0.3 mm, preferably between 0.025 mm to 0.1 mm, most preferably 0.04 mm to 0.08 mm.

The fluid channels have a width between 2 mm to 8.2 mm, more preferably between 0.8 mm to 7.1 mm, and most preferably 3.8 mm to 6.5mm.

Fig. 6 still further illustrates how the ejection channel 603 is formed under the membrane 203 and how the nozzle opening 201 and the extension member are aligned.

Fig. 7 shows a cross-sectional view of the actuator unit an according to an embodiment of the invention and illustrates the electrical signals in the actuator design according to an embodiment of the invention. Each actuator unit comprises a stiffening element 304, a top piezoelectric element 302, and a bottom piezoelectric element 303 sandwiched together to form a piezoelectric stack, also referred to as trimorph actuator 301.

In a preferred embodiment of the invention, the top and bottom piezoelectric elements are bonded to the stiffening element via one or more of different adhesives, preferably epoxy adhesives. Furthermore, it may be bonded via direct thermal welding or ultrasonic welding of the piezoelectric elements to the stiffening element.

Each of the piezoelectric elements is electrically connected to a high voltage line 514 and a ground line 516 for the purpose of transferring of electrical signals from and to the piezoelectric elements.

Fig. 7a illustrates layered structure of an actuator according to an embodiment of the present invention. In detail, Fig. 7a illustrates the surfaces in the structure of the actuator.

In a preferred embodiment of the invention, the top surface J of each of the top piezoelectric elements is connected to a high voltage driving signal via a conductive structure present on or in the middle PCB plate 503 and is further preferably connected via conductive structures present on or in the top PCB plate 502 to the electrical connector 102, which in turn allows for connecting a driving signal source for the supplying of a high voltage to the top surface of the top piezo.

Said conductive structures, or electrodes, preferably are thin metallic films preferably having a composition of one or more of copper nickel alloys, copper, gold, silver, nickel, rhodium, or copper zinc alloys. Said thin films being applied and/or structured via one of sputtering, physical vapor deposition, atomic layer deposition, spin coating, etching or ink-jetting.

In a preferred embodiment of the invention, the lower surface (K) of each of the bottom piezoelectric elements is connected to a high voltage driving signal via a conductive structure present on or in the lower PCB plate 504 and is preferably further connected via the conductive structures present on or in the lower referencing element 507, the middle referencing element 506, the top referencing element 505, the middle PCB plate 503 and the top PCB plate 502 to the electrical connector 102, which in turn allows for connecting a driving signal source for the supplying of a high voltage to the lower surface of the bottom piezo.

In an embodiment of the invention, the top surfaces J of the top piezoelectric elements are connected to a common high voltage driving signal. The bottom surface C of the top piezoelectric element is connected to a ground.

In an embodiment of the invention, the bottom surfaces K of the lower piezoelectric elements are connected to the common high voltage driving signal. The top surface A of the bottom piezoelectric element is connected to a ground.

The length dimension, i.e., the longest dimension, of the piezoelectric elements is preferably between 5 mm to 13 mm in length, more preferably between 6 mm to 12 mm, and most preferably between 9 mm to 11 mm. The width dimension is preferably between 0.5 mm and 2 mm, more preferably between 0.8 mm and 1.2 mm, and most preferably 1 mm.

In a preferred embodiment of the invention, the thickness is preferably between 0.05 mm to 0.5 mm more preferably between 0.1 mm and 0.3 mm and most preferably between 0.13 mm to 0.25mm.

The preferred length and width dimensions of the stiffening element are essentially the same but having a shorter length than the piezoelectric elements on one side by a value of at least 0.1mm.

In a preferred embodiment of the invention, the thickness of the stiffening element is preferably between 0.1mm and 0.7 mm, more preferably between 0.2 mm and 0.6 mm and most preferably between 0.3mm and 0.5 mm.

The piezoelectric elements have a directionally remanent polarization along the stacking direction and generally are polarized in such a fashion that when a positive voltage is applied via the high voltage line, a downward deflection of the actuator is caused via a differential in the resulting transversal deformation of the top piezoelectric element and the bottom piezoelectric element.

There are the two common modes used in piezoelectric energy actuation. The applied stress and applied voltage are in the same direction in d33-mode, while in d3 1-mode, stress is applied in an axial direction, but the voltage is applied in a perpendicular direction.

In a preferred embodiment of the invention, the deflection of the actuator is caused by a differential transversal d31-deformation of the piezoelectric elements present in the actuator in order to cause an essentially orthogonal deflection of the actuator with respect to the length direction of the actuator via the differential compliant deformation of the stiffening element caused by the transversal deformation of the respectively bonded piezoelectric elements. When a negative voltage is applied via the high voltage lines a reversed actuator deflection is caused.

In a preferred embodiment of the invention, the voltages provided by the first and the second high voltage lines are of the same values.

In an alternative embodiment of the invention, the piezoelectric elements have a directionally remanent polarization along the stacking direction and generally are polarized in such a fashion that when a negative voltage is applied via the high voltage lines, a downward deflection of the actuator is caused via a differential in the resulting transversal deformation of the top piezoelectric element and the bottom piezoelectric element.

In an alternative embodiment of the invention, different voltages are applied to a first high voltage line and a second high voltage line as to cause a controlled differential between the deflection of the piezoelectric elements.

In an alternative embodiment of the invention, the piezoelectric elements have an opposing or different direction of their remanent polarization and voltages can be independently applied in order to cause a controlled actuator deflection.

In a preferred embodiment of the invention, a temporary polarization, i.e. the polarization generated by the applied voltage, of the piezoelectric elements in generated via an electrical connection at the upper and lower surface of the top and bottom piezoelectric elements. The upper side of the top piezoelectric element is referred to as J surface in Fig. 7a.

Said surface is preferably coated with a thin, conductive metal film or in other words an electrode. Said film being fully or selectively applied via one of sputtering, physical vapor deposition, atomic layer deposition, spin coating, etching or ink-jetting. Said surface has preferably a composition of one or more of copper nickel alloys, copper, gold, silver, nickel, rhodium, or copper zinc alloys.

Preferably the same film is applied to the upper and/or lower surfaces of the top and/or bottom piezoelectric elements.

The driving signal may be provided by a suitable signal source, which is not detailed in this description.

In a preferred embodiment of the invention, the lower surface of the top piezoelectric element (M) is connected to a conductive structure present in the middle referencing element 506, which further electrically connects it via conductive structures present in or on the top referencing element 505, the middle PCB plate 503 and the top PCB plate 502 to the electrical connector 102, which provides a connection to ground.

In a preferred embodiment of the invention, the top surface of the lower piezoelectric element (L) is connected to a conductive structure present in the middle referencing element 506, which further electrically connects it via conductive structures present in or on the top referencing element 505, the middle PCB plate 503 and the top PCB plate 502 to the electrical connector 102, which provides a connection to ground.

In a preferred embodiment of the invention, the ground connections correspond each to an individual piezoelectric element and further each of the individual connections to ground are switchable from a connection to ground, to a state that forms an electrically disconnected conductive element.

In a preferred embodiment of the invention, said connecting elements may consist of a solder pad, conductive traces, a contact pad or a through hole, allowing for connection via soldering and/or an electrically conductive bonding to a conductive element.

In an alternative embodiment of the invention, the top referencing element 505, the middle referencing element 506 and the lower referencing element 507 may be replaced by a single element with conductive structures and dimensions configured to allow for the same function as the individual referencing elements.

As detailed above, the piezo stack comprises a stiffening element 304, a top piezoelectric element 302, and a bottom piezoelectric element 303. At one end of the piezo stack the extension member 401 may be provided, this may also be referred to as the free end.

At the other end the electrical connection is provided via a central referencing plate 506 via a soldering pad, a contacting pad, conductive traces, or a through hole, allowing for soldering or bonding via a conductive element.

At a central position a top clamping element 305 and a bottom clamping element 306 are provided. Said elements restrict the motion of the actuator at a central position so that only one end beyond the last contacting point with either of the clamping elements towards the direction of the extension member defines the free end of the piezo stack and/or the free end of the actuator. The top clamping element 305 is further preferably affixed to the top PCB element 502 and the bottom clamping element 306 is further affixed to the main fluidic plate 107.

A top referencing element 505, a middle referencing element 506 and a bottom referencing element 507 are utilized for spatial referencing of the actuator stack, so that a surface (G and K) is formed on the underside of the bottom piezoelectric element and the bottom referencing element in order to enable a precise bonding and position of the piezo stack to the bottom PCB plate 504. Said bottom PCB plate further being bonded to the main fluidic plate 107 allowing for a precise positioning of the actuator.

Further surface (F and J) are formed on the top of the top piezoelectric element and the top referencing element, in order to enable a precise bonding of the piezo stack and electrically connect the piezo stack to the top PCB plate 505.

In a preferred embodiment of the invention, the top referencing and the bottom referencing element have essentially the same thickness as the respective top and bottom piezoelectric elements and the middle referencing element has the same thickness as the stiffening element.

The stiffening element preferably extends onto the middle referencing element, said elements being separate elements and having a constant width corresponding to the width of the piezoelectric elements, while preferably having a combined length at least 1 mm longer than the length of the longest piezoelectric element.

In a preferred embodiment of the invention, the top and the bottom piezoelectric element are of a similar length.

In an alternative embodiment of the invention, the lower piezoelectric element has a length between 100% and 134% of the length of the upper piezoelectric element, wherein the length of the corresponding referencing elements is altered so that a combined total length of the referencing elements and the respective piezoelectric element corresponds to a length about equal to the combined length of stiffening element and the middle referencing element.

The stiffening element may consist of non-conductive materials, namely a glass fiber material, a carbon fiber material, a metal oxide material a composite material or a ceramic material.

In an alternate embodiment of the invention, the connection of the piezoelectric elements may be respectively switched from a high voltage connection to a ground connection and vice versa and a conductive stiffening element may be used and may consist of a conductive carbon fiber material, a metal material or any of the non-conductive materials with a conductive coating or film applied to the surfaces contacting the piezoelectric elements and middle referencing element.

The lower surface of the top piezoelectric element and the top surface of the lower piezoelectric element are connected to the common ground line 516, which is switchable to be connected or disconnected to ground and connects to the respective piezoelectric elements via the formed surfaces L and M in Fig. 7a.

In an alternative embodiment of the invention, the conductive structure that is on or in the middle PCB plate 503 fully contacts the surface (J) and is bonded via a conductive adhesive or soldering joint to the top piezo element 302.

Surface A is the corresponding interface between the bottom piezoelectric element 303 and the stiffening element 304. This interface is also non-conductively bonded preferably via an epoxy adhesive or another non-conductive bonding agent.

In an alternative embodiment of the invention, wherein the direction of the electrical signal connections of the top and bottom surfaces of the piezoelectric elements are reversed, a conductive adhesive for the purpose of bonding a conductive stiffening element to the piezoelectric elements is used.

Surface B is an interface between the middle referencing element 506 and the stiffening element 304. That is, B is bonding the stiffening element non-conductively to the middle referencing element. On this surfaces, no conductive structures are present on the middle referencing element.

Surfaces D, E, F, G, H and I are bonded via a non-conductive epoxy adhesive or another non-conductive bonding agent, leaving sections of one or more of the surfaces free of adhesive for the purpose of electrically connecting or bonding different conductive structures on or in elements that are contacting at the aforementioned surfaces.

Surfaces J and M are bonded via a non-conductive epoxy adhesive or another non-conductive bonding agent, leaving sections of these surfaces free of adhesive for the purpose of electrically connecting or bonding different conductive structures on or in elements that are contacting at the aforementioned surfaces.

In an alternative embodiment of the invention, surfaces J and K are bonded via a conductive epoxy adhesive or another conductive bonding agent or via soldering. Surfaces L and M are bonded via a conductive epoxy adhesive or another conductive bonding agent or via soldering.

In an alternative embodiment of the invention, surfaces J and M are bonded via a non-conductive epoxy adhesive or another non-conductive bonding agent, leaving sections of these surfaces free of adhesive for the purpose of electrically connecting or bonding different conductive structures on or in elements that are contacting at the aforementioned surfaces.

In a preferred embodiment of the invention, one or more of the top- middle- and the bottom referencing element consisting of non-conductive glass fiber, polyimide, pps or pe.

In a preferred embodiment of the invention, the extension member is positioned with a distance between 0 and 500µm distance to the lengthwise end portion of the lower piezoelectric element, on the central axis along the width of the piezoelectric element. And being bonded to said element via an epoxy adhesive film.

In this disclosure all epoxy adhesive or bonding agent films preferably have a thickness between 0.5 to 60 µm. Furthermore, the term bonding agent may refer to cyanoacrylates, acrylics, epoxies, urethanes or polyimide based adhesives.

Fig. 7b shows a diagram of a driving signal applied to the actuator over time according to an embodiment of the invention. That is, different voltages, deflections, and switching states are shown on the ordinate axis and time is shown on the abscissa axis. The respective values and scales are of exemplary nature and do not represent any scale.

Hereinafter a common input voltage is defined as V and corresponds to the value of the variable high voltage values provided by the first high voltage line to the top surface of the top piezoelectric elements in an embodiment of the invention.

Vt denotes the input signal corresponding to variable high voltage values provided by the first high voltage line to the top surface of the top piezoelectric elements in an embodiment of the invention.

Vb denotes the input signal corresponding to variable high voltage values provided by the second high voltage line to the bottom surface of the bottom piezoelectric elements in an embodiment of the invention.

In a preferred embodiment of the invention, the input voltages are provided by a high voltage signal generating unit and the common value of Vt and Vb is discretely switchable between n states with Vo corresponding to no applied voltage, and Vₙ representing the maximum applicable positive voltage and V₋ₙ representing the maximum applicable negative voltage It is noted that between V₋ₙ and Vₙ any number n of intermediate voltages is possible. Fig. 7b is simplified for better intelligibility.

In an alternative embodiment of the invention, the values of Vt and Vb are individually addressable.

In an alternative embodiment of the invention, the values of or Vt and Vb are individually addressable for each piezoelectric element.

The minimum change between the closest discretely addressable values of V is preferably between 0.5-10 Volts more preferably between 1-7 Volts and most preferably between 1.5-5.5 Volts.

A preferred maximum voltage is between ±20 and ±150 Volts, more preferably between ±45 and ±105 Volts. And the number of discrete voltage steps is freely variable depending on the closest discretely addressable values of V.

TPD corresponds to the transversal d31 mode deflection of the top piezoelectric element.

BPD corresponds to the transversal d31 mode deflection of the bottom piezoelectric element.

SG₁ corresponds to the switched ground line in the connected state, allowing for a current to flow to the grounded electrodes of the corresponding piezoelectric elements, thereby allowing an electromagnetic field to be generated between the electrode elements of the piezoelectric element, essentially causing a deflection caused by a respective positive or negative value of the generated high voltage signal.

SG₀ corresponds to the switched ground line in the disconnected state, not allowing for a current to flow to the grounded electrodes of the corresponding piezoelectric elements, thereby stopping an electromagnetic field from being generated between the electrode elements of the piezoelectric element, essentially stopping a deflection caused by any positive or negative value of the generated high voltage signal.

A deflection of the actuator herein refers to the deflection of a reference point at the free end of the actuator. That, to the deflection of the actuator free end, on which the extension member according to the invention is provided.

AD corresponds to the generally orthogonal actuator deflection and roughly corresponds to the deflection of the stiffening element. It is noted that Fig. 7b shows the deflections in a simplified form, depending on the temporal actuator dynamic the actual deflection my differ, and in particular may have a more sinus-like appearance.

PDT defines a positive deflection threshold, that is the distance of downward deflection in a period of time and in relation to the highest position of deflection of the actuator required in order to eject a liquid via the generation of a pressurization in the pressurization area. The PDT is dependent on the rheological characteristics of the material to be ejected and requires a certain positive deflection to be achieved within a period of time for the successful ejection of the material.

NDT defines a negative deflection threshold, that is the amount of upward deflection in a period of time and in relation to the lowest position of the actuator that is required in order to ensure a priming or refilling of the ejection area with liquid material. The NDT is dependent on the rheological characteristics of the material to be ejected and requires a certain negative deflection to be achieved within a period of time for the successful priming or refilling of the material.

Depending on the time scale the deflection of the actuator may roughly correspond to the displacement graph as presented in Fig. 7b. Fig. 7b merely illustrates the displacement modes achievable with different configurations of electric signal that may be supplied to one or more piezoelectric elements at a given time but is not exhaustive.

At higher frequencies the actuator deflection over time may have a more sinusoidal shape as it approaches the harmonic frequency of the actuator system.

The use of higher voltages or multiple piezoelectric elements will generally cause a faster acceleration and a larger displacement than low voltages and single piezoelectric actuation

This allows for a larger range of controllable displacement accelerations, speeds, and decelerations to be achieved of a larger amount of time. An ejection threshold for a given material is therefore dependent on the total displacement and the acceleration speed and deceleration at which the displacement occurs.

A preferred maximum deflection of the free end of the actuator from its resting position, wherein no voltage is applied through any of the high voltage lines, is between ±0,4µm and ±25µm, more preferable ±0.9µm and ±17.5µm.

Preferred values for PDT and NDT are between 0.8µ and 40µ, more preferable 1µ and 30µ.

The rise and fall time are denoted with t on the abscissa, that is the amount of time required for a deflection to be completed under the applied voltage and a corresponding deformation of either of the piezo ceramic elements.

A preferred rise time t is between 0.5µs and 120µs, more preferable 0.8ps and 85µs.

The difference between the positional state ADₙ and AD₋ₙ, namely Δ ADₙAD₋ₙ divided by the time Tn define the average deflection speed vₙ. The average deflection speed vₙ can generally be controlled by the delta between the deflections of the corresponding piezo ceramic elements during a switching of the displacement voltages, wherein the value of vₙ is generally higher when the delta between the deformations is higher.

The applied voltage in one piezo element is always running against the polarization of the other piezo element when the voltage is positive or negative for both elements, thereby causing a maximum deflection of the piezo ceramic elements when the positive or negative maximum voltages are applied.

A preferred vn is between 0.025µ/µs and 100µ/µs, more preferable 0.1µ/µs and 37.5µ/µs most preferably 0.21µ/µs and 8µs.

The rise time t associated with an actuation while a maximum voltage is applied to both piezo ceramic elements and the switching of the input signal causes a maximum difference between the applied displacements on both piezo ceramic elements and further causes a maximum value of vₙ to be achieved.

Further the deflection acceleration, speed and deceleration, or in other words the temporal shaping of the actuator deflection, can be controlled by a shaped electronic input signal, namely a waveform, such that the voltage experienced by one or more piezoelectric elements may gradually increase or decrease or may increase or decrease sharply and therefor affect the deflection speed accordingly.

A differential application of voltages to the top and bottom piezoelectrical elements allows for an even more precise control of the actuator deflection and subsequently the pressurization as illustrated in Fig. 7b.

Allowing the voltage to be varied freely instead of with discrete values allows for a more precise shaping of the actuator deflection.

In an alternative embodiment of the invention, a pulse width modulation of the one or more input signals for the top and bottom piezo is used for a more precise shaping of the actuator deflection.

Fig. 8 shows an actuator block 701 according to an embodiment of the invention from an isometric top angle view. The actuator block 701 comprises a plurality of actuator units, preferably 32 to 96 units. It further shows a conductive structure 511 on or in the top PCB element 503.

In an embodiment of the invention, 32 units are preferred as the production and qualitative characteristics of a block are well controllable with a small amount of piezoelectric elements present, further the high voltage drive electronics (e.g., high voltage shift register) are able to address either 8 or 32 channels and therefore can be supplied with the corresponding drive electronics present outside of the printhead in order to facilitate the construction of variable printhead lengths.

It is a core concept of the invention that the actuator blocks can be pre-fabricated and any number of actuator blocks can be concatenated to form an actuator assembly with a scalable number of actuator units.

In an alternative embodiment of the invention, a printhead consists of a single actuator block.

Fig. 9 shows an actuator assembly according to an embodiment of the invention from an isometric top angle view. The actuator assembly 702 comprises a plurality of actuator stacks 701, preferably 3 stacks.

### Pumping Actuation

Fig. 10a shows a schematic side view of a printhead according to a first embodiment of the invention with an extension member in a neutral position; and Fig. 10b shows a schematic side view of a printhead according to the first embodiment of the invention with an extension member in a deflected position.

That is, the extension member 401 is also in a neutral position and not compressing the ejection channel. Figs. 10a and 10b further show the ejection area 607 in the ejection channel 603 and the nozzle opening 201 underneath the end of the extension member 401. Between the end of the extension member 401 and the ejection area 607 the membrane 203 is provided.

Fig. 10b shows a schematic side view of a printhead according to an embodiment of the invention with the piezoelectric element in a deflected position. That is, , the extension member 401 is moved downward and is compressing the ejection channel 603 and creating a pressurization of the liquid material present in the pressurization area 608.

In other words, a downward displacement of the actuator unit is shown, thereby elastically deforming the membrane element 203 and positively pressurizing the ejection area 607, thereby creating a virtual chamber 609 (not shown) inside the surrounding pressurization area 608 in the ejection channel 603.

Said pressurization is key for the ejection of highly viscous materials and enables the ejection of liquid materials with rheological properties unsuited for traditional inkjet systems.

The ejection of said materials is achieved via a directional pressurization of a liquid material present within the aforementioned pressurization area 608 in the ejection channel. The pressurization needs to achieve a pressure differential between the virtual chamber 609 and the ambient pressure on the opposite site of the nozzle plate.

Applicants have realized that in a system according to the present invention, the pressure differential has to be maintained for a duration of about 0.5 microseconds or longer in order to allow a drop buildup and enough material flow for a material to be ejected beyond a Oh value of 2.3.- Oh being the Ohnesorge Number.

With previous systems it is not possible to eject materials vastly beyond said Oh value of 2.3 with a relatively low back-pressure differential to ambient and without the use of jetting valves. The highest Oh value under which material can be ejected within the prior art of traditional inkjet systems is utilizing a multiple pulse ejection method.

Said multiple pulse ejection method requires a much more complex waveform and is restricted in terms of the rheological properties of the liquid material being ejected, specifically, with a strong viscoelastic response of said material at high frequencies.

The effect for ejection of materials beyond this Oh value is critically enabled by a long period of pressurization, with said pressure being induced through the displacement of an actuator, wherein the majority of the displacement of said actuator generally occurs at a speed below the speed of sound of the liquid medium being ejected.

This type of actuation can be referred to as a non-acoustic or pumping type actuation and can roughly achieve Oh values of up to 8 or 9 with a system according to the present invention.

### Shaped Membrane

Fig. 11a shows a schematic side view of a printhead according to a second embodiment of the invention; and Fig. 11b shows a printhead according to the second embodiment of the invention from an isometric top angle view.

In Fig. 11a an embodiment of the present invention is shown, depicting a shaped membrane element 204. Said element is preferably attached to an extension member 401 or a lower intermediate plate 613 preferably attached to the lower end of the extension member. Preferably the shaped membrane is attached via an adhesive.

In a related embodiment, the extension member may have a reduced or a partially reduced diameter at the lower end position in order to accommodate the shaped membrane in the passthrough portion. Preferably the shaped membrane is attached via an adhesive. The reduction of the diameter leads to a reduced diameter lower surface of the extension member, which is in direct contact with a shaped portion of the membrane that is forming a new lower surface of the actuator is interacting with the fluid below it.

The displacement of the extension member 401 therefore is leading to an equal displacement of mostly the central shaped portion of the shaped membrane, therefore transferring the displacement energy and pressurization more efficiently in the central pressurization area 608, closely surrounding the virtual chamber without losing energy by displacing the portions of the membrane surrounding the lower membrane surface and therefore pressurizing the liquid material not present in a near proximity to the virtual chamber.

Fig. 11b shows a different perspective of the shaped membrane of Fig. 11a. The membrane is shaped such that it surrounds the essentially cylindrical end portion of the extension member and the lower intermediate plate, which is provided to have a circular shape.

In a preferred embodiment of the invention, the shaping of the membrane is facilitated by thermal deformation of a sheet of material or via an ablative processing of a sheet of material.

The reduced diameter extension member or the lower intermediate plate in direct contact with the shaped membrane preferably has a diameter between 300 to 700 µm, more preferably 400 µm on the lower portion of the reduced diameter extension member as compared to an original diameter preferably between 700 to 1000 µm, more preferably of 800 µm.

In an alternative embodiment of the invention, the diameter reduction may only occur at a partial section of the extension member in order to facilitate a simpler adhesion method of the upper end of the extension member. The diameter reductions are the same as the total diameter reductions mentioned herein above.

That is, in a preferred embodiment of the invention the full or partial diameter reduction of the extension member ranges between 50 and 75%, more preferably about 63% compared to the diameter on the upper end portion of the extension member 401 in other described embodiments.

### Nozzle plate displacement

Fig. 12a shows a schematic side view of a printhead according to the first embodiment of the invention with an extension member in a deflected position; and Fig. 12b shows a schematic side view of a printhead according to the first embodiment of the invention with an extension member in a deflected position.

That is, Fig. 12a and 12b show a closer side view of the printhead with a cut section along the direction of the piezo actuator with a downward displacement of the actuator unit occurring and further with a displacement of the nozzle plate occurring.

Further in Fig. 12a displaced nozzle plate 610 is shown. This displacement occurs as a secondary effect of the pressurization of an area underneath the lower extension member surface. The displacement of the nozzle plate is much smaller than the displacement of the actuator and is exaggerated for visibility in the drawings. The Applicants have realized that the deformation of the nozzle plate has an effect on material present on the underside, i.e. ejection side, of the nozzle plate.

The displacement of the nozzle plate aids the release of a droplet that is still in contact with the nozzle plate. The displacement is strongly linked to the fluid communication between the underside of the extension member and the nozzle plate and the distance between them.

The nozzle plate elastically follows a downward displacement according to a pressure buildup above the plate with relationship to the ambient pressure on the underside of said plate and an upward displacement in relation to the pressure being generally decreased with respect to a previous internal pressurization state or a general ambient pressurization.

The displacement is directly correlated to the pressurization and the distance of the nozzle plate to the lower surface of the actuator in its neutral position. This secondary displacement has an impact on drop ejection by causing surface perturbations in a drop filament, generally aiding in releasing the droplet from the ejection orifice.

In an embodiment of the invention, the maximum nozzle plate displacement is between about 0.1 to 4 µm in relation to an actuator displacement between about 2 to 60 µm.

In Fig. 12b an elongated filament 614 of an ejected material is shown. Said filament can render a drop ejection to be impossible with certain materials. Filaments and are generally related to a higher viscosity or higher viscoelastic response of said liquid material under a dynamic ejection condition.

When these filaments form, they have an ability to be broken in different regimes. Said fluid thread breakup regimes being generally named atomization regime, first and second wind induced regime, Raleigh regime or dripping regime.

With dripping not being relevant due to a missing acceleration of the material out of the ejection orifice and with the most relevant regime generally being the Raleigh regime for creation of singular droplets for accurate droplet deposition.

Said Raleigh breakup achieving a droplet separation or pinch off from the fluid thread by surface perturbations in the fluid thread surface leading to a Raleigh plateau instability and causing the perturbations to increase with the length of the fluid thread and at some point leading the fluid thread to become thin to a point, which leads to a breakup into one or more droplets.

This fluid thread breakup can become impossible, if not enough motion energy is present in the ejected material, leading to the fluid thread not reaching the length where a pinching off is possible, or where the rheological characteristics of the material make a pinching off unfavorable, which is more likely in highly viscous or viscoelastic materials or materials being ejected under conditions characterized by a high Weber number.

The secondary effect of a displaced nozzle plate during the ejection, as shown in Fig. 12b causes surface perturbations into the fluid thread during the ejection which leads to a stable drop release by aiding in the pinch off of a droplet.

This is further aiding in a pinch off that is occurring at a regular time interval with relation to the initial material ejection, thereby ejecting singular droplets of highly viscous material with a high regularity.

Said time interval is generally determined by the pressurization of the material present in the pressurization area between the lower surface of the actuator and the nozzle plate and said pressurization in turn being related to the distance of the underside of the actuating element and the upper side of the nozzle plate.

It has been found that several distances of the lower extension member surface 606 or alternatively the lower membrane surface to the upper side of the nozzle plate leads to stable ejection for most materials under a certain viscosity ceiling, this occurs specifically at distances between said elements of 80 to 90 µm and 180 to 200 µm.

The energy delivery due to a large actuator displacement is the dominant effect and more critical in ejecting highly viscous materials but the secondary effect is more critical in releasing materials with further rheological properties that would generally prevent material ejection.

The ceiling for energetic ejection currently lies at around 380 mPa×s at the point of ejection with materials more favorable rheological characteristics for achieving pinch off and around 350 mPa×s for materials with less favorable characteristics for said pinch off.

The characteristics of the liquid material being generally less favorable for achieving a pinch off are a higher material viscosity, a higher viscoelastic response at lower frequency pressurizations of the material, a lower surface tension under certain conditions in the higher viscosity regime, and a lower material density under certain conditions in the higher viscosity regime.

Further a lower nozzle diameter and a lower ejection velocity being generally less favorable for high viscosity material ejection in the case of a mostly acoustic actuation of the material.

The primary pressurization of the actuator in the present invention generally occurs at a speed below the speed of sound in the liquid material present in the pressurization area, and therefore is not an acoustic actuation but a pumping actuation.

Part of the displacement of the actuator may or may not happen for an early part of the actuation at a speed higher than the speed of sound of the material and therefore can be treated as an acoustic interaction.

Having an elongated pressurizations due to a large displacement of the actuator taking place over a longer amount of time allows for material to be transported through the nozzle opening primarily by the pressurization and not as an effect of an acoustic wave interacting with the outside surface of a meniscus or a pendant drop being present in the nozzle conduit or the underside of the nozzle plate.

Said pressurization is directly controlling the size and speed of the droplet and is further controlling the thread breakup and drop release with the secondary effect and generally being influenced by the speed of the actuator displacement and the range of the actuator displacement.

Said speed and range being addressable according to the invention by a variable voltage and utilizing a switchable ground line and in order to shape the acceleration and distance of displacement of the actuator.

### Alternative Actuator Geometries

Fig. 13a shows a printhead according to a third embodiment of the invention from an isometric top angle view; and
Fig. 13b shows a schematic side view of a printhead according to the third embodiment of the invention.

Specifically, a printhead with two rows of actuator assemblies, as discussed in the embodiments above. Said actuator assemblies are mirrored and arranged parallel with respect to each other. This results in two parallel rows of extension members being formed, interacting with two corresponding ejection manifolds. In this embodiment one in- and outflow channel is present for each of said ejection manifolds.

Fig. 14 shows a printhead according to a fourth embodiment of the invention in a cross-sectional view.

In the embodiment of Fig. 14, which is related to the embodiment of Fig. 13a and 13b, a central channel is a shared channel, said channel may be an inflow channel or an outflow channel, depending on the desired flow direction of the material.

Fig. 15 shows a printhead according to a sixth embodiment of the invention in a cross-sectional view.

In the embodiment of Fig. 15, rows of actuator assemblies share a single ejection manifold, effectively connecting each pair of the corresponding extension members via a corresponding ejection channel.

Fig. 16a shows a printhead according to a seventh embodiment of the invention from an isometric top angle view; and Fig. 16b shows a cross-sectional view of a printhead according to the seventh embodiment of the invention.

In the embodiment of Figs. 16a and 16b a shaped trimorph bender actuator provided. Said shaped trimorph bender actuator comprises a horizontally tapered stack of top- and bottom piezoelectric elements, and the stiffening element, as discussed above

Said elements are generally tapering from the end connected to the referencing element towards the end on which the extension member is provided to allow an interlocking of two opposing actuator assemblies in a zip-like arrangement to form a single row of extension members. According to this embodiment a doubled density of ejection members may be obtained along a single ejection manifold. Each extension member preferably has a corresponding ejection channel associated thereto. The associated ejection channel preferably has a reduced width.

What has been described and illustrated hereinabove are embodiments of the invention along with some of variations. The terms, descriptions and figures used herein are set forth by way of illustration only and are not meant as limitations. Those skilled in the art will recognize that many variations are possible within the spirit and scope of the invention, which is intended to be defined by the following claims -and their equivalents- in which all terms are meant in their broadest reasonable sense unless otherwise indicated.

### Reference numeral listing

### Printhead assembly

102 electrical connector
103 material inflow connector
104 material outflow connector
106 case element
107 main fluidic plate
109 nozzle plate
110 membrane fastening element
111 first vacuum connector
112 second vacuum connector

### Ejection side

201 nozzle opening
202 spacing element
203 membrane element
204 shaped membrane element
205 extension member through opening
206 membrane through opening
207 heating plate

### Actuator assembly

301 actuator
302 top piezoelectric element
303 bottom piezoelectric element
304 stiffening element
305 top clamping element
306 bottom clamping element
401 extension member
403 extension member referencing element

### Actuator attachments

501 heating plate connecting element
502 top PCB plate
503 middle PCB plate
504 lower/bottom PCB Plate
505 top referencing element
506 middle referencing element
507 lower referencing element
508 first high voltage line
509 second high voltage line
510 ground line
511 conductive structure

### Fluidic elements

601 fluid inflow channel
602 fluid outflow channel
603 material ejection channel
604 inflow connecting point
605 outflow connecting point
606 extension member lower surface
607 ejection area
608 pressurization area
609 virtual chamber
610 displaced nozzle plate
611 first bypass structure
612 second bypass structure
613 lower intermediate plate
614 elongated drop filament

### Stacking of actuator units

701 actuator block
702 actuator assembly

## Claims

1. A method for operating an actuator unit for a printhead,
wherein the actuator unit comprises:
a first piezoelectric element connected to a first electric potential and a third electric potential;
a second piezoelectric element connected to a second electric potential and the third electric potential; and
wherein the actuator unit is configured such that it deflects, when the first and second electric potential has the same polarity with respect to the third electric potential;
wherein the method comprises:
applying a first variable high voltage, Vt, between the first electric potential and the third electric potential;
applying a second variable high voltage, Vb between the second electric potential and the third electric potential; and
applying a switchable ground connection to the third electric potential.

2. The method according to claim 1, wherein the first variable high voltage, Vt, and the second variable high voltage, Vb, are the same variable high voltage and preferably a positive or negative voltage.

3. The method according to claim 1 or claim 2;
wherein the first variable high voltage, Vt, and the second variable high voltage, Vb, are discreetly switchable between n states.

4. The method according to claim 3;
wherein n is between 2 and 200, preferably between 3 and 150.

5. The method according to any one of claims 1 to 4,
wherein the switchable ground connection has two states:
a) a first state in which a ground connection is in a connected state, allowing for an electric current to flow from the respective first and second electric potentials in order to generate an electric field across the respective piezoelectric elements thereby causing their deformation, preferably a d31-mode deformation,
b) a second state in which a ground connection is in a disconnected state, allowing for no electric current to flow from the respective first and second electric potentials thereby preventing an electric field across the respective piezoelectric elements to be generated and thereby causing no deformation.

6. The method according to claim 5,
wherein a maximum deflection in an upper direction, AD_{n,} corresponds to the ground connection in the connected state, and a maximum positive voltage Vb and Vt;
wherein the maximum deflection-in a lower direction, AD₋ₙ, corresponds to the ground connection in the connected state, and a maximum negative voltage of Vb and Vt.

7. The method according to claim 6,
wherein the average deflection speed, vₙ, is defined by the positional difference between ADₙ and AD₋ₙ divided by a rise time, t, required to reach the respective maximum deflection state from the time of switching on the respective voltage; and
wherein preferably the vₙ is between 0.025µm/µs and 100µm/µs, more preferably between 0.2 µm/µs and 37,5µm/µs.

8. The method according to any one of claims 1 to 7, wherein the maximum second voltage Vbₙ and first voltage Vtn is between 20 and 250 Volt, preferably between 40 and 200 Volt.

9. The method according to any one of claims 1 to 8,
wherein ET is defined as ejection threshold for a downward deflection at which material is ejected from the printhead; and
wherein preferably ET is between 0,3µm and 40µm, more preferably between 1µm and 30µm.

10. The method according to any one of claims 1 to 9,
wherein PT is defined as refilling threshold of the printhead in an upward deflection at which the ejection area is primed with material to be ejected; and
wherein preferably PT is between 0,3µm and 40µm, more preferably between 1µm and 30µm.

11. The method according to any one of claims 9 or 10, wherein the first and second voltage and ground connection state are selected such that the actuator unit maintains a deflected state above ET for a duration between 0.2 to 75 microseconds.

12. The method according to any one of claims 10 to 11, wherein the first and second voltage and ground connection state are selected such that the actuator unit maintains a deflected state above PT for a duration between 0.2 to 70 microseconds.

13. The method according to any one of claims 1 to 12, wherein the first and second voltage and the ground connection state are selected such that the actuator unit is deflected with an average deflection speed between 0.025µm/µs and 100µm/µs.

14. The method according to any one of claims 1 to 13, wherein the first and second voltage and the ground connection state are selected such that the displacement of the actuator is below the speed of sound of the liquid material ejected from the printhead.
